# EUROPEAN PATENT APPLICATION

(11) **EP 1 002 727 A2**
(43) Date of publication of application: **24.05.2000**
(21) Application number: 99308644.6
(22) Date of filing: 01.11.1999
(51) Int. Cl.: B65B 57/00, B65B 1/02, G05B 19/418

(54) **Assembly and conveyor apparatus, particularly for packaging system**

(30) Priority: 30.10.1998 US 106217 P; 13.05.1999 US 299634
(71) Applicant: Langen Packaging Inc., Mississauga, Ontario L5T 1Z2 (CA)
(72) Inventor: Martin, Ronald W., Mississauga, Ontario L5T 1Z2 (CA); Guttinger, Peter, Mississauga, Ontario L5T 1Z2 (CA); Lamonaca, David, Mississauga, Ontario L5T 1Z2 (CA); Popescu, Petre, Mississauga, Ontario L5T 1Z2 (CA); Harris, Cameron, Mississauga, Ontario L5T 1Z2 (CA)
(74) Representative: Crump, Julian Richard John

(57) **Abstract**

A continuous delivery system is used for delivering items such as bags or other containers from one station to another. Bags may be continuously formed from a continuous web of bag material, cut, filled with a product, folded and then sealed. These functions may take place at several different stations (12,14,16) and the transfer between stations may take place continuously. Operations such as filling, folding and sealing can take place at a single station (16), such as on a rotating turret. Various aspects of the functioning of the system are controlled by one or more PLCs which ensure continuous proper delivery of the items throughout the system. Linked PLCs may be provided on respectively stationary and rotating parts of the system. Alignment mechanisms assist in the proper transfer of an item from one station to another. Items can have their orientation altered from a generally flat horizontal orientation to an upright vertical position as they are transferred between two stations.

## Description

The present invention relates to assembly and conveyor apparatus, particularly for packaging systems.

Continuous delivery systems and methods are known. An example of a container delivery system is a system which forms, fills and seals bags. However, difficulties are associated with such systems, in trying to provide for continuous operations from the beginning to the end of such systems. Many different operations must be performed, often at separate operation stations. Difficulties may exist in transferring containers continuously between the various stations in such systems.

In one aspect of the invention, a system is provided which operates with continuous movement to form and fill containers such as bags. In a preferred system, bags are continuously formed from a roll of web material. The web may then be formed into a tube and bags continuously cut from the tube. Thereafter individual bags may be cut from the tube and individual bags can then be continuously fed to a transfer station which continuously transfers bags to a continuously moving bag sealing and filling station. In a preferred embodiment the bags may also be appropriately folded at the sealing and filling station. The invention also relates to corresponding methods of forming, filling, and sealing such containers, and if desired folding such containers.

In another aspect of the invention, a moving object, such as a container, for example a flattened bag, is translated about a first axis, and then translated about a second axis, the second axis being generally perpendicular to said first axis.

In another aspect of the invention, a system is provided which (1) continuously receives objects having elements such as for example ends or sides, moving in a generally longitudinal direction, each object having at least one panel oriented generally horizontally, and which then (2) reorients successive objects continuously to an orientation where the elements (such as the ends or sides) are still moving generally horizontally but in which that panel has been oriented vertically. In a preferred aspect of the invention, the objects may, once they have been reoriented in step (2), be then moving in a horizontal curvilinear, for example a circular, path. The system may also preferably provide for (3) continuously taking the objects from their second orientation, and then continuously moving them to an orientation where the ends are oriented vertically. Preferably during the reorientation of the objects in step (3), the objects continue to move horizontally, while the ends are translating from a horizontal to a vertical orientation. Corresponding methods are also part of the invention.

In another aspect of the invention a system is provided which has at least one continuously moving object holder. At this continuously moving object holder, a series of successive operations are performed on an object which is being held in the continuously moving object holder. In a preferred aspect of the invention, an object such as a bag may be sealed and filled. For example, the top and bottom ends of the bag may oriented vertically in the holder and a bottom of the bag may be sealed. The bag may then be filled and thereafter the top end of the bag sealed, all while being held in the moving object holder. In a further preferred embodiment of the invention, the holder may be provided with a means to fold the bag one or more times, for example by folding a lower portion over a medial portion, and thereafter folding the upper portion over the medial and lower portions. In a preferred aspect of the invention, the system has a plurality of object holders each moving past both an object pick up point and an object drop off point. The system may provide for successive continuous delivery of objects to successive object holders. Thus the operations described above may be performed successively on each of the objects held in successive object holders. Corresponding methods are also part of the invention.

In another aspect of the invention there is provided an object holder having elements with several, for example at least four, separate functional movements. This can be achieved by providing for corresponding separate cam follower movements in cam tracks, for each of the separate movements. In another aspect of the invention, rail members interacting with the object in the holder and/or the holder itself can be utilised to perform operations on the object. This interaction can complement the functionality achieved by the object holder elements, which can be achieved by interaction between the cam followers and the cam tracks.

In another aspect of the invention a horizontal rotating turret having one or more object pick-up holders mounted thereon, is adapted to translate the object through an angle of 90 degrees. Therefore, for example, an object which is received by a holder in a horizontal orientation, during at least part of the rotation of the turret, can be rotated 90 degrees to a vertical orientation.

In another aspect of the invention, a continuous overhead conveyor can be utilised to suspend an object while moving the object from a first position to a second position. In a preferred embodiment, the vacuum can be discharged, for example by forced air, to release the object at a specific transfer or drop-off point. It is possible for selected objects to permit those objects to pass by that transfer point and be discharged further downstream where there is no vacuum exerted by the suspended conveyor, or the vacuum is released.

In another aspect of the invention, there is a method and apparatus which is directed to synchronising a continuous object filling and forming system having several components. A downstream component in the system is utilised to synchronise and preferably maintain synchronisation, of system components located upstream. This technique can be used both at start up as well as while the system is running. While running, for example, an object's position upstream can become out of phase with a system component downstream, and one or more components upstream are adjusted so that the object is put in phase with the downstream component, not the other way around.

In another aspect of the invention, there is a method of filling a gussetted bag being held in a holder, by pulling out the first outward facing gusset portion of the bag and then filling the bag in the inner gusset portion of the bag. Preferably, the outer face will contain the longitudinal lap seam in the bag, if there is one.

According to a further aspect of the present invention, there is provided a controlled assembly apparatus comprising: a stationary platform; a rotating platform, rotating relative to the stationary platform and comprising a plurality of assembly stations, each assembly station comprising an electrically controllable or monitorable peripheral; a first programmable logic controller, on the stationary platform; a second programmable logic controller on the rotating platform, electrically interconnected to the peripherals of the assembly stations to control or monitor the peripherals and communicatively coupled to the stationary platform to exchange control or monitoring signals with the first programmable logic controller. Each of said peripherals may comprise independently controllable heating units, or an electrically controllable pneumatic valve, eg for operating a pneumatic peripheral such as a suction cup at an associated assembly station, or a pneumatically actuated fluid dispenser.

In accordance with another aspect of the present invention, there is provided an assembly apparatus comprising: a support comprising a laterally extending guide; a work station movably mounted on the support, for movement along the guide; the work station comprising a working surface and an operations arm, the operations arm being movable from a first arm position away from the working surface to a second arm position, whereat the operations arm exerts force on a work object held at said working surface; a cam follower movable linearly between a first follower position and a second follower position, and operably interconnected with the operations arm to move the arm from said first arm position to the second arm position, as the cam follower is moved from the first follower position to the second follower position; a cam guide, extending laterally along the support, and engaging the cam follower to transversely guide the cam follower from the first follower position to the second follower position as the workstation is moved laterally along the support; and a pressure rail, extending laterally along the support and proximate to the operations arm to exert pressure on the operations arm toward the working surface, after the arm is in the second arm position. The operations arm may be pivotally mounted on said work station about a pivot point. The lever arm may pivot relative to said pivot arm. The cam follower may be interconnected to said pivot arm by a lever arm, extending from said pivot arm to pivot said pivot arm about said pivot as said cam follower is moved from said first follower position to said second follower position. The operations arm may further comprise a sealing surface to exert pressure on said work piece, and may for example comprise a roller opposite said sealing surface for engaging said pressure rail. The pressure rail may be biased toward said work station as said rail exerts pressure on said arm, and may comprise an hydraulic cylinder to bias said pressure rail toward said work station. The hydraulic cylinder may be adjustable, to provide an adjustable biasing force to said pressure rail.

In accordance with a further aspect of the present invention, there is provided a method for delivering a continuous stream of containers along a predetermined path from a first station to a second station, each the container having a longitudinal axis, the method comprising: while moving each of the containers along the predetermined path, rotating each of the containers about the longitudinal axis and rotating the container to rotate its longitudinal axis. Preferably each said container is rotated by about ninety degrees about its longitudinal axis, and preferably each said container is rotated to rotate its longitudinal axis by about ninety degrees. Prior to said rotations, each longitudinal axis of each said container may be generally parallel to a direction of movement of said each container along said predetermined path. Each of said containers may be first rotated about its longitudinal axis, and thereafter rotated to rotate its longitudinal axis. The container may be rotated about said longitudinal axis as said container is being moved along a first curvilinear portion of said predetermined path, and thereafter rotated to rotate said longitudinal axis as said container is being moved along a second curvilinear portion of said predetermined path. The first curvilinear portion of said path may have an axis of rotational movement which is inclined relative to an axis of rotational movement of said second portion of said path. Said first portion may be a first portion of a circular path and said second portion may be a second portion of a second circular path. Each container may be a bag, which may be generally flat. In this case each flat bag may have a top and a bottom connected by opposed sides, and said top and bottom of said bag may be continuously moved from a generally horizontal orientation to a generally vertical orientation.

In accordance with another aspect of the present invention, there is provided a continuous conveyor system for delivering containers from a first station to a second station along a predetermined path, each container having a longitudinal axis, the system comprising a rotation apparatus which rotates each said container about its longitudinal axis and rotates each container to rotate the longitudinal axis. The rotation apparatus may comprise a first rotation device to rotate each of said containers about its longitudinal axis, and a second rotation device to rotate each of said containers to rotate said longitudinal axis. The first rotation device may rotate each container by about ninety degrees about its said longitudinal axis, and the second rotation device may rotate each said container to rotate its longitudinal axis by about ninety degrees.

The first rotation device may comprise a first continuous conveyor turret mounted for rotation about a first turret axis, a drive mechanism to rotate said first conveyor turret about said first turret axis, said first conveyor turret having mounted on said first conveyor turret around said first turret axis a plurality of retainers, each of said retainers having a pick up face oriented at an inclined angle of less than ninety degrees relative to said first turret axis when at said container receiving station, said retainers of said first turret each being adapted to pick up a container at a first turret container receiving station, to hold said container and then to release said container to said second rotation device at a first turret container discharge station, each of said retainers rotating on said first turret about said first turret axis between said container receiving station and said container discharge station, such that when each said container is rotated from said first conveyor turret receiving station to said first turret discharge station, each of said containers is rotated about its longitudinal axis.

The said second rotation device may comprise a second continuous conveyor turret mounted for rotation about a second turret axis, a drive mechanism to rotate said second conveyor turret about said second axis, said second turret axis being oriented at an inclined angle of less than ninety degrees relative to said first turret axis, said second conveyor turret having a plurality of retainers mounted on said second conveyor turret and about the second turret axis, each of said second turret retainers being adapted to pick up, hold and drop off a container, said second conveyor turret rotating in synchronisation with said first turret such that successive retainers of said second turret will pick up successive containers released by successive retainers at said first turret discharge station, and while said container rotates on said second turret about said second turret axis to a second turret container discharge station, each said retainer rotates to rotate its respective container and its corresponding longitudinal axis. The pick up face of said retainers may be oriented at an angle of about forty five degrees relative to said first turret axis when said retainers are positioned at said container receiving station, and said second turret axis may be oriented at an angle of forty five degrees relative to said first turret axis, such that the pick up face of said retainers is oriented at an angle of about ninety degrees relative to said second turret axis when said retainers are positioned at said container receiving station.

The second rotation device may comprise: a turret mounted for rotation about a turret axis having a container loading station and a container drop off station; a drive mechanism to rotate said turret about said turret axis; a retainer mounted on said turret to pick up, hold, rotate and release a container that is in a position proximate said retainer, while said turret is rotating, said retainer being operably interconnected with said turret to rotate said container to rotate its longitudinal axis while said turret is rotating; and an alignment element associated with said retainer, said alignment element being mounted for movement between a container engagement position to align said container in relation to said retainer and a container disengagement position; said system being operable to disengage said alignment element when each retainer is at said loading station and then engage said alignment element along a part of said predetermined path after said loading station and between said loading station and said drop off station, and then disengage said alignment element before said retainer reaches said drop off station. The alignment element may be engaged after said retainer has rotated said container to rotate its longitudinal axis.

The system may further comprise a third continuous conveyor turret mounted for rotation about a third turret axis which is oriented generally parallel to said second turret axis, a drive mechanism to rotate said third turret about said third turret axis, said third turret having a plurality of retainers mounted on the third turret and about said third turret axis, said retainers of said third turret being adapted to pick up a container released by a retainer of said second turret at said second turret discharge station and move said container to said second station. The retainers of said third rotating turret may each comprise: a base adapted to receive, hold and release a container; a first operation assembly mounted for movement in relation to said base and adapted to perform a first operation on a container held by said base; and a second operation assembly mounted for movement in relation to said base and adapted to perform a second operation on a container held by said base; said system being operable to move said first operation assembly proximate said container held by said base to perform said first operation on said container, said system being operable to thereafter move said second operation assembly proximate said container, to perform said second operation on said container held by said base.

In accordance with another aspect of the present invention, there is provided a continuous conveyor system for performing at least one operation on each of a plurality of work pieces, the conveyor system having a plurality holders, the conveyor system operable to continuously move the holders from a first station to a second station, each of the holders comprising: a base having adapted to receive, hold and release a work piece; a first operation assembly mounted for pivoting movement in relation to the base and adapted to perform a first operation on a work piece; and a second operation assembly mounted for pivoting movement in relation to the base and adapted to perform a second operation on the work piece held by the base; the system operable to move the first operation assembly proximate the work piece to perform the first operation on the work piece, the system being operable to thereafter move the second operation assembly proximate the work piece, to perform the second operation on the work piece.

In accordance with another aspect of the present invention, there is provided a continuous conveyor system for performing one or more operations on a plurality a containers being carried by a plurality of holders on a predetermined path from a first station to a second station by the conveyor system, each of the holders comprising: a base being adapted to receive, hold and release a container; a first operation assembly mounted for rotation in relation to the base and adapted to perform a first operation on a container held by the holder; and a second operation assembly mounted for rotation in relation to the base and adapted to perform a second operation on the container held by the holder; the system being operable to rotate the first operation assembly proximate the container to perform the first operation on the container, and operable to thereafter rotate the second operation assembly proximate the container, to perform the second operation on the container.

The system may further comprise a third operation assembly mounted for rotation in relation to said base and adapted to perform a third operation on a container held by said holder; and a fourth operation assembly mounted for rotation in relation to said base and adapted to perform a fourth operation on said container held by said holder; said system being operable to rotate said third operation assembly proximate said container to perform said third operation on said container, and being also operable to rotate said fourth operation assembly proximate said container, to perform said fourth operation on said container. The first operation assembly may comprise a first sealing assembly, said system being operable to move said first sealing assembly against said container, to apply a first seal to said container. The second operation assembly may comprise a second sealing assembly, said system being operable to move said second sealing assembly against said container, to apply a second seal to said container. The third operation assembly may comprise a first crimping assembly having a first crimping bar mounted for rotation in relation to said base and said fourth operation assembly may comprise a second crimping assembly having a second crimping bar mounted for rotation in relation to said base, said system being operable to move said first crimping bar to crease a portion of a container held by said holder, said system also being operable to move said second crimping bar to crease a second portion of said container. While said bag is being creased by said first crimping bar, said system may be operable to move said lower sealing bar against said lower portion of said container, to seal the container at its lower portion, and while said container is being creased by said second crimping bar, said system may be operable to move said upper sealing bar against said upper portion of said container, to seal the container at its upper portion.

The system may further comprise: a first cam slot and a first cam follower configured to move in said first cam slot; a second cam slot and a second cam follower configured to move in said second cam slot; said first operation assembly comprising a first pivot arm pivotally connected to said base and operably connected to said first cam follower for pivoting movement of said first operation assembly relative to said base; said second operation assembly comprising a second pivot arm pivotally connected to said base and operably connected to said second cam follower for pivoting movement of said first operation assembly relative to said base; and said system being operable to move said holder along said continuous conveyor path, such that said first and second cam followers move in said first and second cam slots respectively, to rotate said first and second operation assemblies to said positions proximate said container, to perform said first and second operations on said container.

The system may further comprise: a third cam slot and a third cam follower configured to move in said third cam slot; a fourth cam slot and a fourth cam follower configured to move in said fourth cam slot; said third operation assembly comprising a third pivot arm pivotally connected to said base and operably connected to said third cam follower for pivoting movement of said third operation assembly relative to said base; said second operation assembly comprising a fourth pivot arm pivotally connected to said base and operably connected to said fourth cam follower for pivoting movement of said fourth operation assembly relative to said base; and said system being operable to move said holder along said continuous conveyor path, such that said third cam followers move in said third cam slots respectively, to rotate said third and fourth operation assemblies to said positions proximate said container, to perform said third and fourth operations on said container.

The first and second sealing assemblies and first and second crimping assemblies may comprise, respectively, first second, third and fourth pivot arms, each pivot arm being connected to said base for pivoting movement relative to said base, each of said pivot arms being operably connected to a cam follower, each of said cam followers being operable to engage, respectively, first, second, third and fourth cam tracks, such that said first and second crimping assemblies and said first and second sealing assemblies of each holder are activated by each said cam follower engaging one of said first, second, third and fourth cam slots of said conveyor system to rotate said first and second sealing assemblies and said first and second crimping assemblies to said positions to seal and crimp said container.

Where each container is a bag, the system may further comprise a bag opener pivotally mounted on said holder, said system being operable to engage and disengage said opener, wherein prior to said first crimping assembly and said first sealing assembly being activated, said bag is opened by said opener, to permit said bag to be filled with a product. Each bag may have a heat activated adhesive which is activated when at least one of said upper and lower sealing bars engage said bag.

The system may further comprise a first folding rail arranged such that as a holder moves along a predetermined path, a container held by said holder is engaged by said folding rail to fold a lower portion of the container up and against a medial portion of said container. A second folding rail may be arranged such that, as the said holder moves along said predetermined path, said container held by said holder is engaged by said second folding rail to fold an upper portion of the container up and against said medial portion of said bag.

In accordance with another aspect of the current invention, there is provided a continuous transfer conveyor system to transfer at least one container from a first loading station along a predetermined path to a second drop off station, the conveyor system comprising: a turret mounted for rotation about a turret axis; a drive mechanism to rotate the turret about the turret axis; a retainer mounted to the turret to pick up, hold and release a container that is in a position proximate the retainer, while the turret is rotating, an alignment element associated with the retainer, the alignment element being mounted for movement between a container engagement position to align the container in relation to the retainer and a container disengagement position; the system operable to disengage the alignment element when each retainer is at the loading station and then engage the alignment element along a part of the predetermined path after the loading station and between the loading station and the drop off station, and then disengage the alignment element before the retainer reaches the drop off station. The system may further comprise a container guide means configured to retain said container in a position proximate said retainer along a portion of said predetermined path, said system being operable to first release a container held by a retainer, and then engage said alignment element along said portion of said predetermined path, and then engage said retainer to pick up said container again, and disengage said alignment element, while said retainer moves along said portion of said predetermined path. The system may further comprise: a cam track; and a cam arm mounted on said turret proximate said retainer for pivoting rotation relative to said retainer and with said alignment element, said cam arm having a cam follower configured to engage said cam track, and said cam track being configured to move said cam arm to pivot said alignment element into and from engagement with said container. The retainer may be mounted on said turret by a radial shaft, and said alignment element may comprise a plate, said cam arm and said plate being fixedly mounted on a rotatable shaft, and said rotatable shaft being pivotally mounted on said radial shaft for rotation relative to said retainer.

A further aspect of the invention provides assembly apparatus comprising: a support comprising a laterally extending guide; and a workstation; said work station comprising a working surface and an operations arm, said operations arm being movable from a first arm position away from said working surface to a second arm position proximate said working surface; a cam follower; a cam guide; one of said cam follower and said cam guide extending from said workstation and being operatively interconnected with said operations arm to move said operations arm from said first arm position to said second arm position; the other one of said cam follower and said cam guide extending from said support; said workstation and said support being linearly movable relative to each other guided by said guide, said cam follower and said cam guide being interconnected to move said operations arm from said first arm position to said second arm position, as said workstation and said support are moved relative to each other; and a pressure rail, extending laterally proximate said guide and said operations arm to exert pressure on said operations arm toward said working surface, after said operations arm is in said second arm position.

Each of the various aspects of the invention may be embodied or performed in common apparatus in any combination.

The invention will be further described, by way of example only, with reference to the accompanying diagrammatic drawings, in which:
FIG. 1 schematically illustrates a container forming and filling system, exemplary of an embodiment of the present invention;
FIG. 2 illustrates exemplary roll stock for use with the system of FIG. 1;
FIG. 3 illustrates a roll stock feeder forming part of the system of FIG. 1;
FIGS. 4, 5 and 6 illustrate portions of a bag forming station forming part of the system of FIG. 1;
FIG. 6a is a cross-sectional view at 6a-6a in Fig.6;
FIG. 7 is a top view and FIG 8 is a side view of a cutter forming part of the bag forming station of FIGS. 4, 5 and 6;
FIG. 9a is a side elevation view of continuous conveyors forming part of the system of FIG. 1;
FIG. 9b is an opposite detailed side view of a continuous conveyor shown in FIG. 9a;
FIG. 9c is a detailed top view of the conveyor in FIG. 9b;
FIG. 10 is a side elevation view of a first inclined continuous conveyor turret and a first horizontal continuous conveyor turret, forming part of the system of FIG. 1;
FIG. 11 is a top plan view of the first horizontal continuous conveyor turret of Figure 10;
FIG. 11a is a top plan schematic view of an enhanced first horizontal conveyor turret;
FIG. 11b is a side elevation view of the turret in FIG. 11a;
FIG. 11c is an enlarged view of part of FIG. 11a;
FIG. 11d is an elevation view at 11d-11d in FIG. 11c, with some parts omitted for clarity;
FIG. 12 is a perspective view of the first horizontal conveyor turret forming part of the system of FIG. 1;
FIG. 13 is a cross sectional elevation view at 13-13 in FIG. 11 of the first horizontal conveyor turret and part of a second horizontal conveyor turret;
FIG. 14 illustrates a cam guide track forming part of the first continuous conveyor turret of FIG. 11;
FIGS. 15 is a plan view of a portion of a bag filling, folding and sealing station forming part of the system of FIG. 1;
FIG. 16 is a sectional view at 16-16 in FIG. 15;
FIG 17 is an enlarged view of part of the station in FIG 16;
FIG 18 is a plan view of the part in FIG 17;
FIG 19 is another sectional view of the station of FIG. 16;
FIG. 20 is another plan view of the station of FIG. 16;
FIG. 21 and FIG. 22 are schematic views of cam tracks forming part of the station of FIG. 16;
FIG. 23 is a top view illustrating a product distribution turret forming part of the system of FIG. 1;
FIG. 23a is a side elevation view of the product distribution turret of FIG. 23;
FIGS. 24 to 35 illustrate a bag filling, folding and sealing bucket in different operational positions and which form part of the station of FIGS. 15 to 22; and
FIGS. 36, 36A and 36B form a timing diagram, illustrating operation of the station of FIGS. 15 to 35.

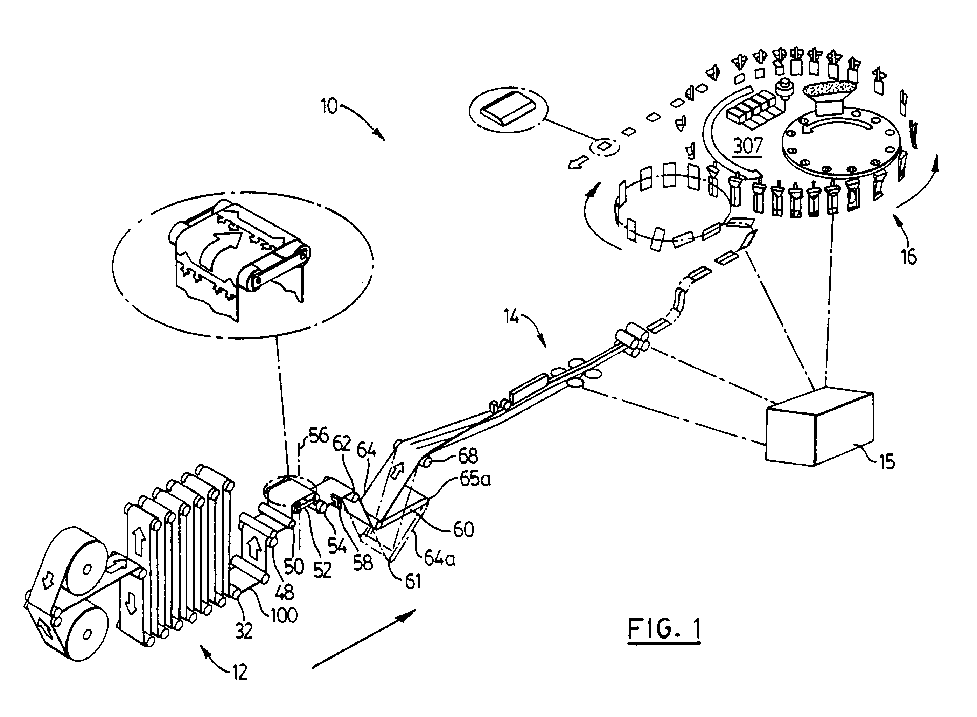

FIG. 1 schematically illustrates a continuous container forming and filling system 10 exemplary of an embodiment of the present invention. System 10 may, for example, be suited to form and fill bags or boxes with product such as cereal, snack food, confectionery, microwave popcorn, and the like. Of course, many aspects of the system 10 can be configured to form and fill other types of containers such as boxes, and the like.

In the exemplary embodiment, a container forming and filling system 10 comprises three continuously operating stations, namely a roll stock feeding station 12; a bag formation station 14; and a bag filling, folding and sealing station generally designated 16. As will become apparent, exemplary system 10 takes raw bag roll stock from feeding station 12 to bag forming station 14 where the roll stock is folded, glued, gussetted and cut to form bags having closed longitudinal edges.

These bags are transported to bag filling, folding and sealing station 16, where the transported bags are filled with a suitable product; folded into a desirable packaging shape; and appropriately sealed. That is, system 10 may form packaged bags of product, roll stock, and adhesive.

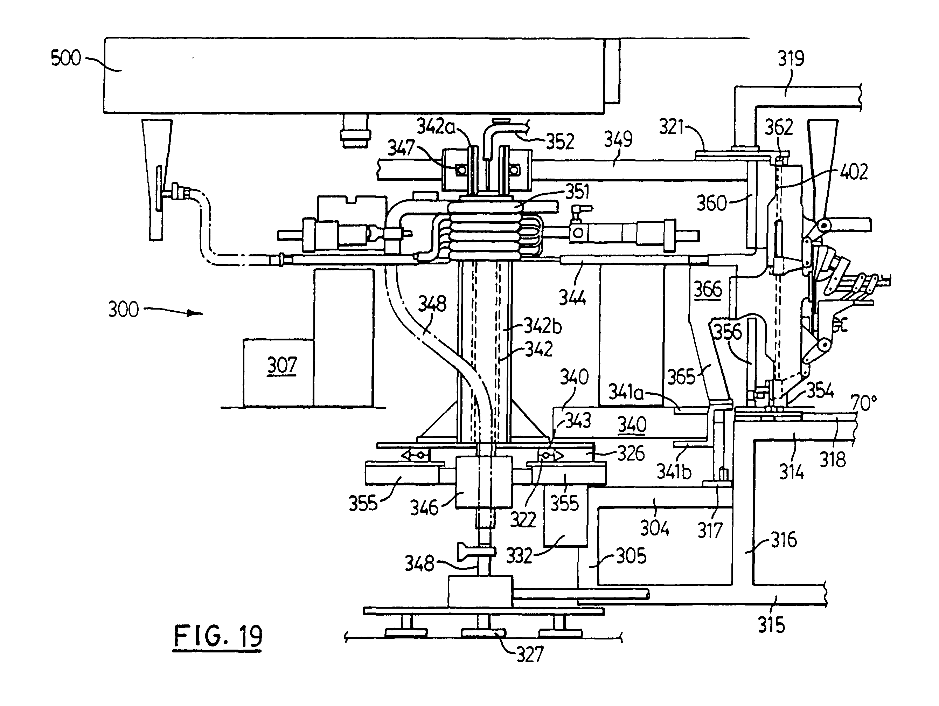

As illustrated in FIG. 1, a first main programmable logic controller ("PLC1") 15 under software control is in communication with, and thus monitors operation of, feeding station 12. Feeding station 12, however, is not directly controlled by PLC1 15, and has its own self-contained tension control system. PLC1 does, however, monitor and control bag forming station 14; transport conveyor belts and turrets; and the main bag filling, sealing and folding station 16. A rotating secondary programmable logic controller PLC2 307, described below with reference to FIG. 19, also forms part of bag filling, sealing and folding station 16. PLC1 may, for example comprise an Allen Bradley PLC 520. Similarly, PLC2 307 may also comprise an Allen Bradley PLC 520.

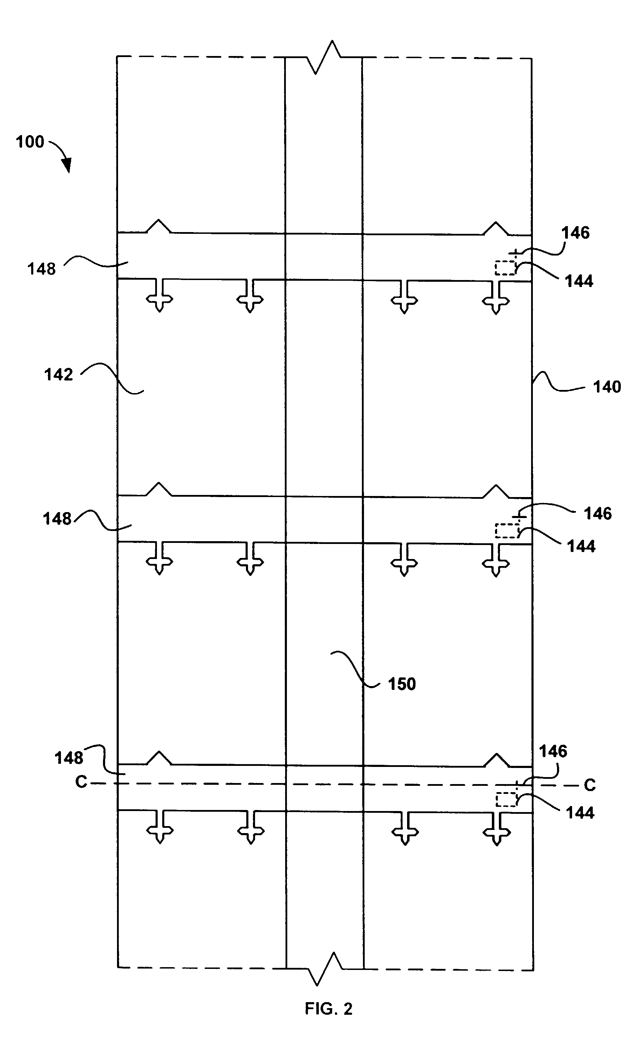

FIG. 2 illustrates suitable roll stock 100 for use with system 10. Roll stock 100 is preferably twenty-seven pound, two-ply, bleached paper roll stock with a plain outer ply 140 and an inner grease resistant ply 142. As illustrated, outer ply 140 is pre-printed with print registration marks 144 and cross hairs 146 used by system 10. As well, the inner ply 142 of roll stock 100 is embedded with heat sensitive gluing regions 148. Optionally, if roll stock 100 is used to form bags for use in a microwave oven, the roll stock may include a "susceptor" region 150 affixed on inner ply 142, as for example detailed in U.S. Patent No. 5,786,010, the contents of which are hereby incorporated by reference.

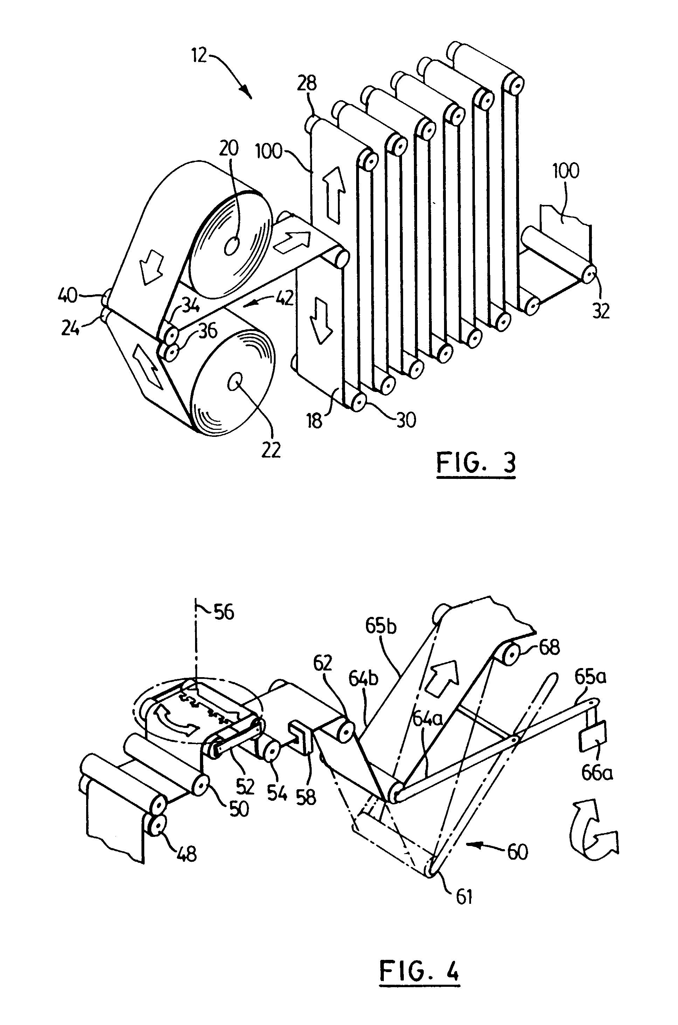

FIG. 3 schematically illustrates an exemplary roll stock feeding station 12 of system 10 (FIG. 1). Feeding station 12 primarily includes a roll stock web feeder 18 also known as an "auto splicer" manufactured by Martin Automatic Inc. of Rockford, Illinois, USA. As illustrated, web feeder 18 comprises feed rollers 20 and 22 mounted parallel to each other and vertically displaced by approximately 2 metres. Feed rollers 20 and 22 are suspended within a web feeder frame (not illustrated). Mounted mid-way between feed rollers 20 and 22 is vacuum roller assembly 24. Mounted upstream, in the direction of roll stock flow, from feed rollers 20, 22 and vacuum roller assembly 24 are two sets of web rollers 28 and 30, at equal vertical spacing. Web rollers 28 are mounted proximate the top of the frame of web feeder 18, while web rollers 30 are mounted in opposed relation to web rollers 28 at the bottom of the frame. A bottom exit roller 32 is mounted beside and downstream of web rollers 30.

Feed rollers 20 and 22 each independently accommodates a roll of roll stock 100. Roll stock 100 is fed from one of feed rollers 20, 22 to vacuum roller assembly 24 and between rollers of web rollers 28 and 30 in order to form a vertically extending web, as illustrated. The roll stock is withdrawn from feeder station 12, guided by exit roller 32.

As illustrated, roller assembly 24 comprises a top and bottom vacuum roller 34, 36. Top vacuum roller 34 is associated with feed roll 20 while bottom vacuum roller 36 is associated with feed roll 22. Roll stock 100 is guided from an associated roll mounted upon feed roller 20 or 22 over the associated vacuum roller 34 or 36 through a guide opening 42 at the rear of vacuum roller assembly 24 and onto web rollers 28 and 30. Roll stock on the remaining feed roller 22 (for example) is fed over bottom vacuum roller 36 where it is held by a vacuum at bottom vacuum roller vacuum openings 40 until roll stock on feed roller 20 (for example) has been nearly depleted.

A splicing knife and taping apparatus (not shown) is located directly upstream of vacuum rollers 34 and 36. As roll stock supply from one feed roll, for example feed roll 20, is depleted a brake (not illustrated) is applied to feed roller 20 thereby stopping the provision of roll stock from feed roller 20. The splicing knife and taping apparatus cuts the roll stock from feed roller 20 just upstream of vacuum rollers 34 and 36. Also, at the same time roll stock is fed from feed roller 22 via bottom vacuum roller 36 into the splicing knife and taping apparatus where the end of roll stock from feed roller 20 is spliced to roll stock buffered on the web by rollers 28 and 30. Buffering is made possible as the two sets of web rollers 28 and 30 are configured to act as an accumulator. Rollers 28 are movable toward and away, oppositely disposed rollers 30. When a roll change is made the rollers 28 and 30 move vertically towards each other to permit the web to be kept continuously feeding from station 12, thereby releasing roll stock buffered between vertically spaced rollers 28 and 30. Once rolls have been changed the buffer can be restored by the roll supply to rollers 28 and 30 at a speed faster than the speed at which station 12 supplies the web to the rest of system 10. Rollers 28 and 30, in turn separate vertically in order to again buffer roll stock. Thus, as should be appreciated, feeder station 12 may provide a continuous feed of roll stock that is pulled over exit roller 32 from feeder station 12. As one roll on feed roller 20 or 22 is being fed, a full roll may be loaded on the other of the feed rollers which is spliced to the feed supply without interruption, once the other roll has been depleted.

The exiting roll stock 100 is supplied to bag forming station 14, more particularly illustrated in FIGS. 1, 4, 5, and 6. As illustrated in FIGS. 1, 5 and 6, station 14 comprises a lengthwise extending frame 46 extending away from feeder station 12 in the direction of roll stock/web flow. As illustrated in FIG. 3, a secondary nip roller 48 is mounted near one end of station 14 and pulls roll stock 100 from exit roller 32 (illustrated in FIGS. 1 and 2) of feeder station 12.

Roll stock 100 is guided over the underside of a guide roller 50, then over a web tracking table 52 and back onto a guide roller 54. A suitable web tracking table 52 is a Simplex HDNC-2630A1-24 web tracking apparatus manufactured by North American Manufacturing Inc. Web tracking table 52 pivots in a horizontal plane about a vertical axis 56 illustrated in FIG. 4 so that the feed path of roll stock from feeder station 12 to bag forming station 14 extends only in the direction of web flow. A band of optical sensors 58 oriented transverse to the direction of the web flow senses the edge of the fed roll stock to ensure its proper alignment. The band of optical sensors 58 is in communication through a closed feedback loop with a stepper motor (not shown) that controls the rotation of web tracking table 52 about vertical axis 56, to maintain the edge of the web in the centre of the band of optical sensors 58.

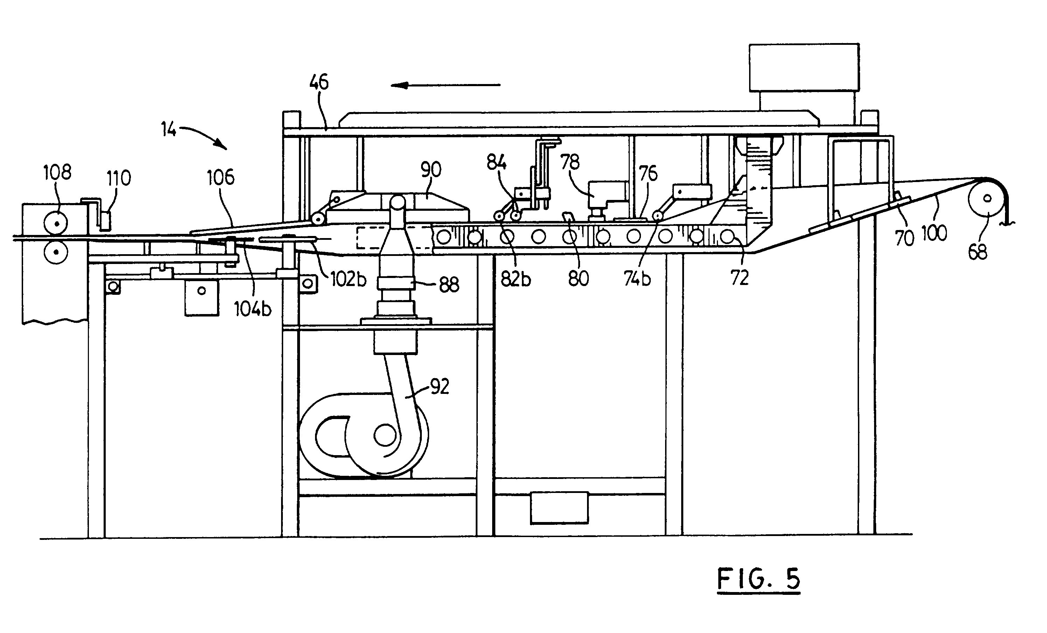

Another guide roller 62, illustrated in FIG. 4, guides roll stock 100 from web tracking table 52 onto a dancer assembly 60. Dancer assembly 60 includes a roller 61 rotatably mounted on support arms 64a and 64b. Arms 64a and 64b are pivotally mounted on frame 46 (FIG. 5) at pivot points 65a and 65b allowing for the up and downward pivoting of roller 61 relative to frame 46. First and second opposing pneumatic plungers 66a are calibrated to maintain a fixed force on arms 64a and 64b, thereby exerting a constant tension on web 100 across roller 61. Further, dancer assembly 60 is calibrated so that at a constant nominal feed rate of 300 feet (90 metres) per minute, as preferably used with system 10, arms 64a and 64b are level. Consequently, arms 64a and 64b are interconnected with a potentiometer (not shown) that is further in communication with an AC motor (also not shown) that drives secondary nip roller 48.

The AC motor speeds up and slows down from a nominal speed controlled by PLC1 15 to keep dancer arms 64a and 64b level. Thus, dancer assembly 60 in communication with this motor provides speed compensation in the event that a change in tension occurs between secondary nip roller 48 and a primary nip roller 108 (FIG. 5). A change in tension is accommodated by the pneumatic plungers 66a and 66b and the secondary nip roller 48 reduces or increases speed momentarily. In particular, dancer 60 compensates for changes in tension just after provision of roll stock 100 (FIG. 2) is changed from one feed roller 20 to the other 22.

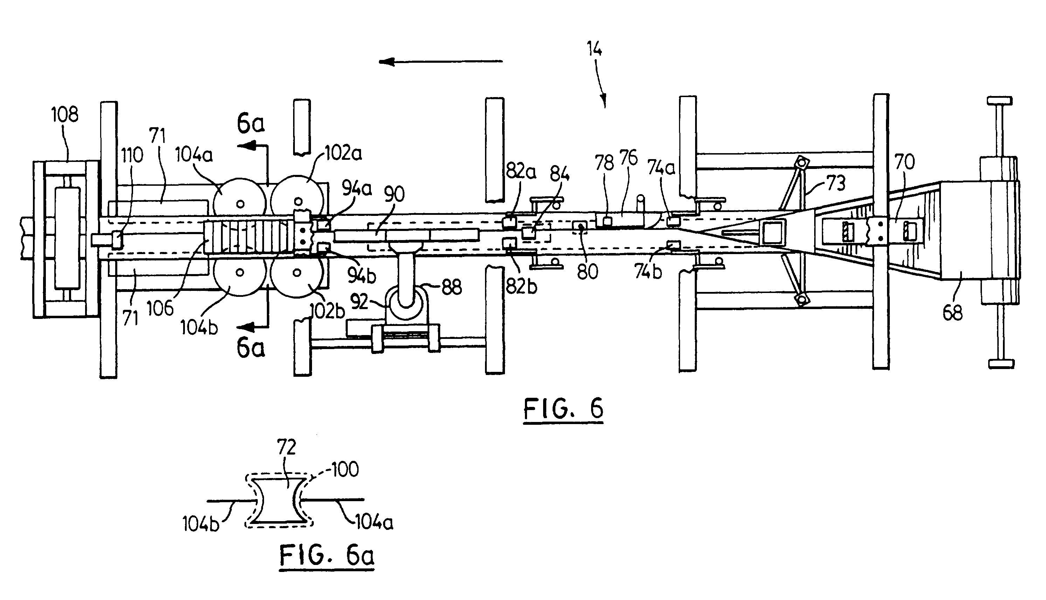

Yet another guide roller 68 illustrated in FIGS. 4, 5 and 6 is mounted on frame 46 downstream of guide roller 62 and elevated approximately 1 metre above guide roller 62. As illustrated in FIGS. 5 and 6, mounted further downstream of guide roller 68 are suspended base frame plates 70 that taper inwardly in a downstream direction, downward beneath a guide beam 72. Guide beam 72 extends lengthwise in the direction of web flow and has a generally square cross-section which tapers near its downstream end. In combination with side guide bars 73 (FIG. 6), base frame plates 70 draw the web downwards below beam 72 and upwards from below over guide beam 72 to form a tube from roll stock 100. The edges of the roll stock 100 form flaps of the tube atop box frame 72. A first edge of roll stock 100, forming a bottom flap, is pressed downwards against the upper face of the guide beam 72 by a roller 74a (FIG. 6). An opposed tension roller 74b applies suitable tension to the opposite edge of web 100, forming a top flap. Just downstream of rollers 74a and 74b is a press plate 76. Press plate 76 has a generally semi-circular shape, with its curved edge extending inwardly toward the centre of the beam 72. A generally rectangular guide extends upwardly from the curved edge of the press plate. Press plate 76 is pressed upon the top flap of the tube web. The upwardly extending rectangular guide maintains a spacing between the top and bottom flap of the formed tube of roll stock 100.

A controlled glue gun 78 is suspended at an angle above the tube frame 72 and is positioned with a nozzle which is angled to apply glue to the inner edge of the bottom flap of the tube web. Glue gun 78 is preferably a Nordson gun model WM830K and is in flow communication with a source of aqueous glue by way of an electronic gun driver such as model E-26 also made by Nordson (not shown). Glue gun 78 is in electronic communication with an adhesive pattern controller (also not shown), that may for example be a Nordson WM408 pattern controller. The pattern controller ensures that the glue is applied in a pattern suitable for forming a longitudinally extending lap seal between the bottom and top flaps of web 100. Located slightly downstream of glue gun 78 is a sensor 80 of an electric liquid adhesive detector (not shown). The detector may, for example, be one made available by Nordson in association with the trade mark WALCOM and model number WM500. Sensor 80 in combination with the detector, detects whether or not adhesive has been properly applied to avoid the possibility of glue not being applied down the seam. If glue is not applied for a period of time exceeding 0.5 seconds, the web motion is discontinued and alarms activated. The result is that the web will no longer be fed and drawn by nip rollers 48 and 108. A signal is also sent to the PLC1 15 to continue processing bags downstream of sensor 80. Once these bags have been processed, the downstream part of the system is also shut down by PLC1 15 (FIG.1) to permit the gluing problem to be corrected.

Glue gun 78 preferably applies a glue such as type 72-4732, a food packaging adhesive made by National Adhesive, along the seam. This glue is an aqueous based glue. The glue and the design of the system are such that prior to transfer of a bag to station 16 (FIG. 1), a "tacky" bond will have formed along the seam. This tacky bond will be sufficient to permit the bag to be transferred to the filling, folding and sealing station 16, (FIG.1) and permit the bag to be filled, folded and sealed at station 16. By the time that a bag is discharged from the station 16, the longitudinal seam bond will have strengthened to form a fibre tear bond (ie the paper will fail before the adhesive bond). The bond may further strengthen after leaving station 16.

Downstream of glue gun 78 and sensor 80 are a further pair of transversely mounted opposed, spaced tension rollers 82a and 82b that maintain the tube-shaped web tightly around beam 72. Disposed between the two tension rollers 82a and 82b is a pressure glue roller 84 which applies downward pressure on the upper flap of tube web 100 to press the upper flap onto the top face of the lower flap, upon which glue has been applied thus forming the seal between the two flaps of the tube.

As the web 100 proceeds downstream along beam 72 the seam passes under a heated air blower 88 illustrated in FIGS. 5 and 6, which directs heated air to the top flap where adhesive has been applied. Heated air blower 88 is a conventional heated air blower such as one made by LEISTER under model #BD7, having a narrow rectangular air diffuser 90, extending upward from an electrical heater and blower 92. Diffuser 90 directs a stream of air onto the seam of the web. The air is heated to approximately 400°C and thereby helps to dry the aqueous glue applied along the seam. However, the heated air does not activate the heat sensitive gluing regions 148 (FIG. 2) embedded along web 100.

Downstream of heat blower 88, is a further set of tension rollers 94a and 94b, illustrated in FIG. 6. At this point, box beam 72 begins to narrow in height with its sides having a gradually tapering depth which has sides that in cross section are curvilinear (as indicated in FIG. 6a) and as illustrated in FIG. 5. Two sets of thin, opposed circular pairs of gussetting discs (102a, 102b and 104a, 104b) protrude into the side of the tubular webbing 100. At the same time a weighted belt 106, formed of a plurality of rectangular weights, rests on the top surface of web 100 and maintains the top of the tube downwards against the top of beam 72. The inward edges of the gusset wheels force the medial portion of the side panels of the tube web 100 inwards. Just beyond disks 104a, 104b, a gusset will have been formed in each side panel of the tube web 100 and the tube will have been flattened. As the now flattened, tubular web 100 moves downstream, tailor-fitted to box beam 72, box beam 72 gradually tapers into the shape of a very shallow I-beam downstream from the two pairs of gussetting disks 102a, 102b; and 104a, 104b. Once flattened, web 100 is received between primary nip rollers 108. Gusset knives 71 are located directly under electric eye 110, and are positioned in the same plane as the gussetting discs 102a, 102b, and 104a and 104b, from either side of the web. This maintains the gusset depth as the web is drawn to the primary nip rollers 108.

At the primary nip roller 108, the web 100 is pulled downstream. Indeed, primary nip roller 108 is largely responsible for pulling the web 100 from feeder station 12, with secondary nip roller 48 (FIG.4) providing speed compensation in the event tension in web changes between primary roller 108 and secondary nip roller 48. Located just upstream of primary nip roller 108 and downstream from the end of the weight belt 106, is the photoelectric sensor eye 110. Sensor eye 110 is aimed to detect the presence of the print registration marks 146 (FIG. 2) and cutting cross 148 pre-printed on web 100 at spaced intervals.

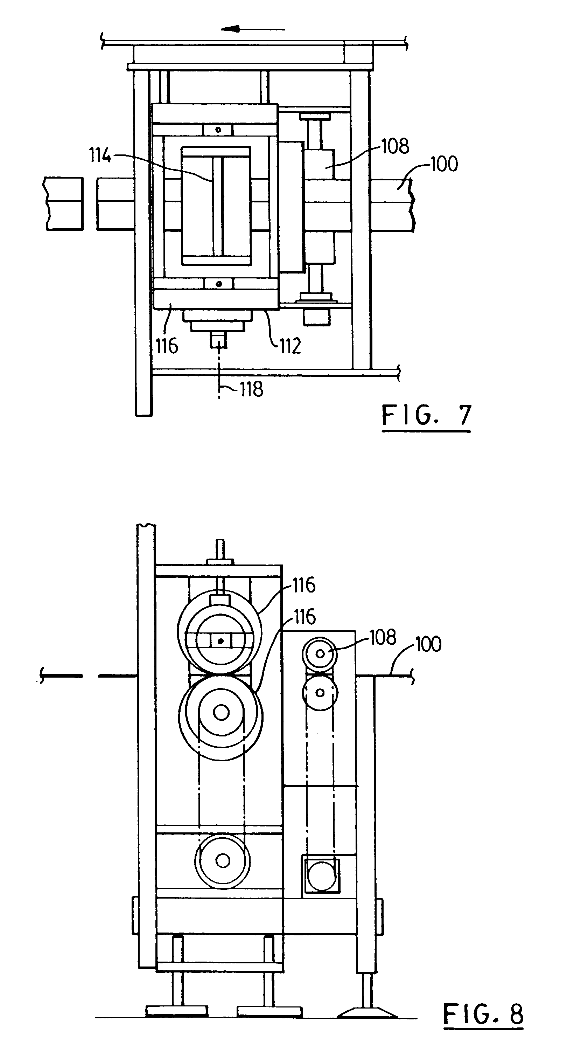

A rotary cutter servo motor drive (not shown) receives a signal from the photoelectric sensor eye 110 in response to detection of the print registration mark 146, and processes the signal to adjust the speed of rotation of a circular blade cutter 112 illustrated in FIGS. 7 and 8. Circular blade cutter 112 comprises a pair of opposed blades 114 mounted on each of two rotatable drums 116, one mounted above and one mounted below the web 100, that rotate about a horizontal axis 118.

Blades 114 are mounted on the drums so that, as the primary nip roller 108 (FIGS. 5 and 6) feeds the web 100 to cutter 112, a blade 114 on the top and bottom rotating drums 116 will cut the web precisely at the pre-printed cross mark 148 on web 100. The top and bottom blades meet each other at the point of cut and shear.

After a registration mark is detected, the blade speed is increased or decreased to position the blades exactly on the registration mark. In the normal course, a gussetted bag will be formed after two successive cuts of the web 100. It should be noted that blade 114 cuts a bag from the web 100 at the place where the heat activated adhesive is inlaid on the web 100. A typical optimum cut-line is shown as C-C in FIG. 2.

If a registration mark 146 or cutting cross 148 is in a position such that the blade is unable to adjust its speed to cut the web within a defined distance of a defined time of receiving a signal from the downstream turret and within defined distance of the registration mark, the servo motor drive notes that an improper length bag, or a proper length bag formed at the improper time relative to the downstream equipment, will be formed and informs the PLC1 15 that this bag should be discarded. It cuts one bag in a random position and looks for the next registration mark. If the bags are identified as "discarded bags" the registration mark is repositioned by increasing the speed of nip roller 108. Failure in attempts to "re-phase" the web in relation to the cutter to form proper length bags for a period of 10 seconds will cause the primary nip roller 108 to stop and an alarm to be raised.

By way of further explanation of the cutting and re-phasing operation, the rotation of the main turret at station 16 is the reference point for the system components upstream. In relation to the bag cutting operation, the main turret will periodically (as described hereinafter by use of a photo eye detecting a hole in a circular plate on the main turret) transmit a signal via PLC1 15 which informs the cutter at which point it needs a bag to ensure that bag will be properly in phase to be received by the downstream conveyors and stations, including the main turret, of system 10. At the same time the sensor eye 110 detects the next print registration mark, and the cutter having an independent logic is able to correlate the two signals to determine whether the bag is actually in phase (within an acceptable phase window).

If it is within the phase window that is acceptable for the downstream components of the system, the cutter will make a cut on the registration mark. The cutter's cutting drum's speed of rotation can be independently varied to some extent to make this cut. If, however, the cutter can not make the cut, a signal will indicate to the PLC1 15 that it could not make an acceptable cut and that this particular bag is designated as a discard bag. The fact that it is a discard bag will be communicated to other components downstream by the PLC1 15 to ensure that the bag is rejected, and the system knows the bag has been rejected. If the cutter can make the proper cut, the bag is passed downstream for further processing.

If, however, the cutter determines upon comparison of the signal from the turret and the signal from the eye sensor 110, that the bag is not in phase with the rest of the downstream system, particularly the main turret, the system must go into an out of phase mode. When the bag and main turret are out of phase, to correct the problem it is desirable to adjust only one of the two. In this embodiment it was decided to make changes to the bag print registration position to get the bag cutting back in phase with the main turret. A signal is sent to the cutter telling it is in out of phase condition and the cutter will cut anywhere within certain parameters. If it cannot make the cut on the registration mark, the cutter will just cut at a random position, but such that it creates a manageable length bag (eg between 20 and 35 cm). Random cuts are made, to try to get a subsequent print registration mark detected by the sensor, which is in phase with a subsequent signal sent by the turret via the PLC1 15 to the cutter. The speed of primary nip roller 108 is adjusted in an attempt to get the print registration mark passing the eye sensor in phase with the main turret. At some time, by adjustment of the speed of the nip rollers up and/or down, the print registration mark and the turret position will probably be put back in phase. Usually (perhaps in as few as three bags) the nip roller will have been able to adjust its speed to get the system into a state where the signal from the eye sensor detecting a print registration mark, and the signal from the main turret, are such that the print registration marks are in phase with the main turret located downstream. It should be noted that the speed of the nip rollers and the rotation of the cutting blades are controlled by a separate logic to PLC1 15.

If it cannot be put back in phase within a specified time (eg about 2 secs) an alarm will be activated, the web feed will stop, the downstream bags will be processed and then the rest of the system will shut down.

However, assuming re-phasing can be achieved within the allotted time, the cutter will then attempt to make the cut on the registration mark, if it can rotate into the correct position, and upon doing so sends a signal to the PLC1 15 to confirm it made a cut on the registration mark. If it cannot, as described above, that particular bag will be discarded, but at that point the print registration and main turret should be in phase.

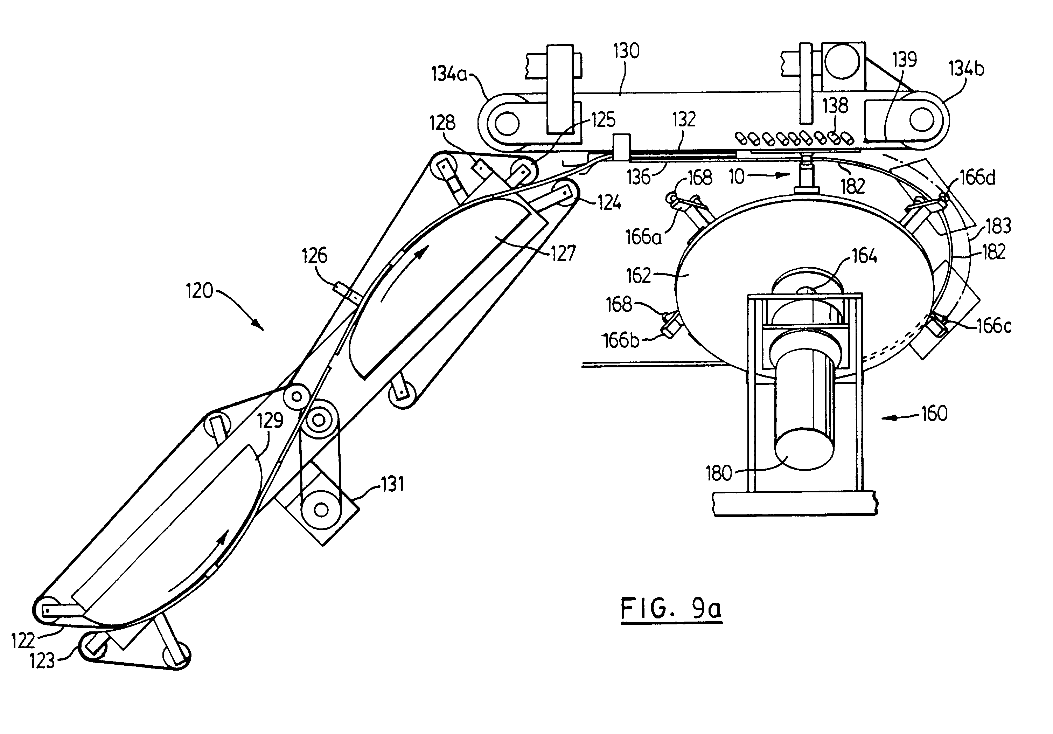

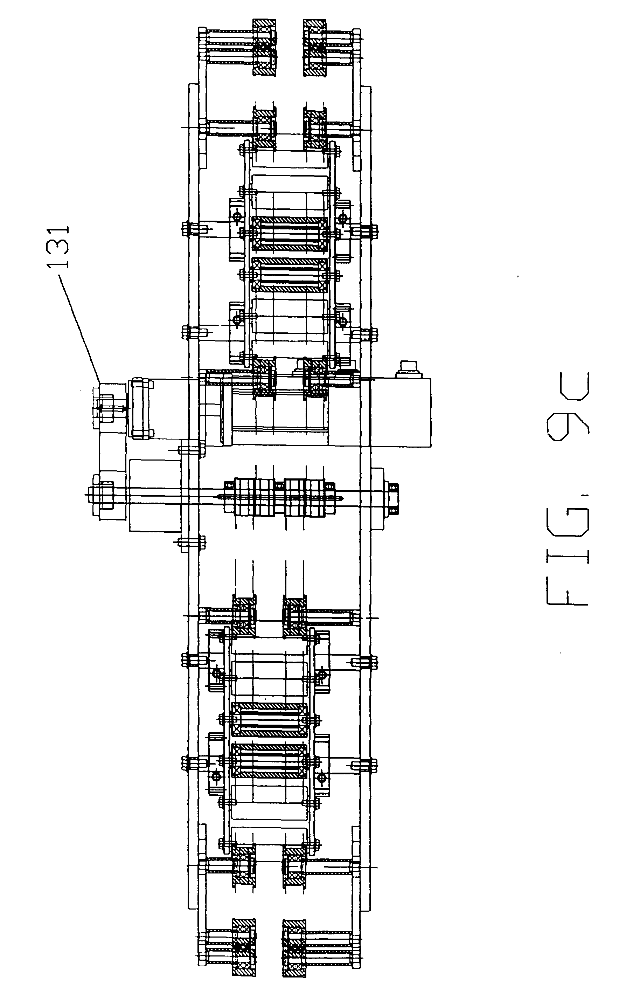

Extending from the output of rotating cutter 112 is an upwardly inclined conveyor 120. An exemplary inclined conveyor 120 is illustrated in FIG. 9a to 9c. Conveyer 120 includes four endless belt pairs, 122, 123, 124 and 125. Belt pairs 122 and 124 are both inner belts. Opposite and adjacent to belt pairs 122 and 124 are outer belt pairs 123 and 125, respectively. Belt pairs 122, 123, 124 and 125 are all driven by a motor 131. Preferably, each of belt pairs 122, 124, 123, 125 includes two spaced apart belts as partly illustrated in FIG 9C.

Each bag is fed between the pairs of inner and outer belts 122, 124 and 123, 125, upward in a generally S-shaped path, upwards toward an endless suspended vacuum conveyer belt 130 that is mounted above frame 46 (FIGS. 5 and 6) horizontally on the frame 46. The inner belt pairs 122 and 124 each follow the contour of a machined bed 129 and 127. The outer belt pairs are each pulled over the respective inner belt pairs causing a resultant compression of the outer belt pairs to the inner belt pairs, thereby providing the driving force on the bag.

After being fed through the rotating cutter 112, individual bags are transferred to suspended vacuum conveyer 130, along conveyor 120. Two optical sensors 126 and 128, in communication with PLC1 15, allow PLC1 15 to verify each bag has a desired length and determine each bag's location. The first optical sensor 126 is used to confirm that the bag is indeed in phase with the main turret located downstream. This is done, for example, by detecting the leading edges of the bags. Second, the first sensor 126 will detect how long a bag remains covering the first sensor. If that time is too short, as detected by the PLC1 15, based on the known velocity of the bag, then the PLC1 15 will know that the bag is too short. If the bag is not in phase with the downstream turret, or if it is too short, the PLC1 15 will take steps downstream to ensure that this bag is rejected and that the main turret knows that this bag is to be rejected, and will therefore not attempt to fill it with filling material. The second sensor co-operates with the first sensor such that if both sensors are activated at the same time, the PLC1 15 knows that the bag is too long. Of course, there will be a range of tolerance, both shorter and longer from the ideal length, that will still be acceptable to the PLC1 15 and thus be processed.

Directly downstream of inclined conveyor 120, suspended vacuum conveyor 130 has a continuous belt 132 mounted about two rollers 134a and 134b that rotate about parallel horizontal axes. Belt 132 has a plurality of openings extending through the belt from its outer surface. Suspended vacuum conveyor 130 is provided with a vacuum chamber within the conveyor housing by way of the input to a centrifugal blower. A vacuum pressure is exerted through holes 136 in the conveyer belt 132 to draw and hold each successive bag received from the downstream inclined conveyer 120. Each bag is thus transferred from the inclined conveyer 120 to the vacuum conveyer 130 and is transferred horizontally.

For those bags which are considered acceptable by PLC1 15 (by virtue of the spaced electric eyes 126 and 128 located on the inclined conveyer) upstream of the vacuum conveyor 130, a series of blow-off valves 138 are activated to force a bag downward from conveyor belt 132 at a first turret transfer position P.

The activation of the blow-off valves 138 breaks the vacuum seal so a suspended bag may be transferred to the first rotating inclined turret 160. For those bags which are not the right length or position as determined by PLC1 15, PLC1 15 will not activate blow-off valves 138. As a result, the bag will not be released from the suspended conveyor 130 at the transfer point P to inclined turret 160. Rather, such a discard bag will pass downstream and will run to the end portion 139 of the suspended conveyor 130 which does not have a vacuum chamber. Thus, a bag reaching portion 139 will no longer have a vacuum force retaining it and will fall from suspended conveyer 130 to be discarded.

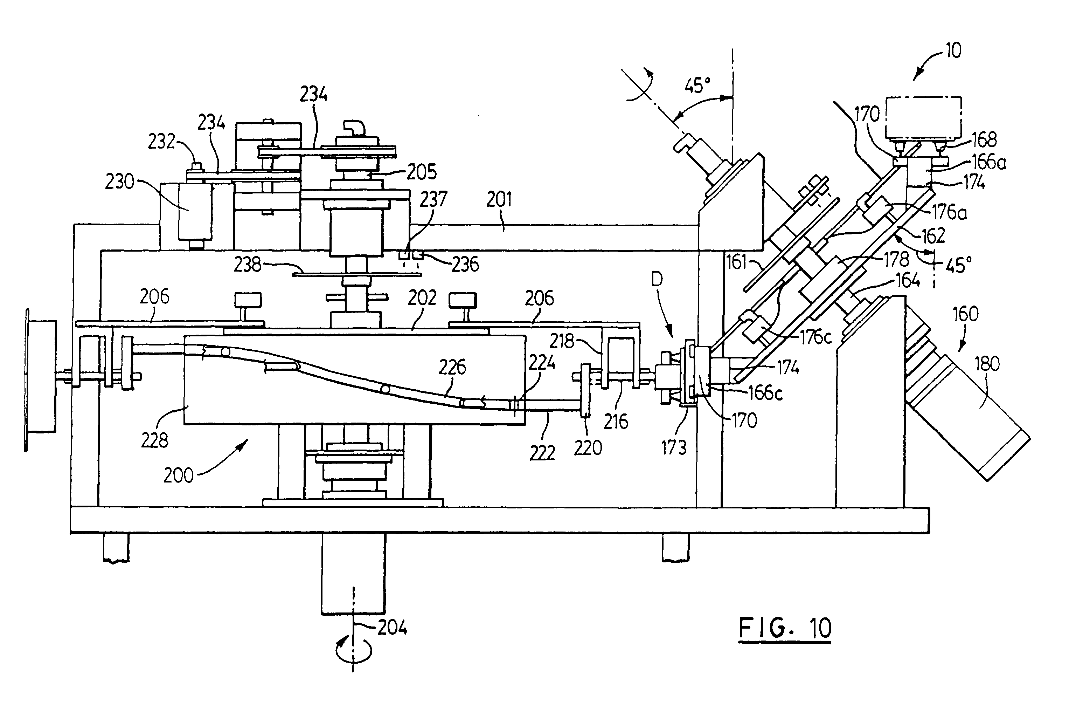

Inclined turret 160, illustrated in FIGS. 9a and 10, comprises a circular carrier 162 mounted for rotation above a shaft 164 that rotates about a central axis that extends at an angle of 45 with the vertical. Mounted about the periphery of the circular exterior of carrier 162 are six pick-up heads spaced equally about the circumference of the turret. Only heads 166a, 166b, 166c and 166d and 166e are shown in Fig. 9a (collectively or individually, heads 166). Each pick-up head 166 comprises two suction cups 168 (FIG. 10) extending from a vacuum generator 170. Each vacuum generator 170 takes at its input a source of pressurised air, and presents a vacuum at its output. The output of each vacuum generator 170 is in flow communication with an associated pair of suction cups 168 on a single pick-up head 166.

The suction cups 168 are fixedly mounted on a mounting base 174 that extends from carrier 162 at a 45 angle away from the axis of rotation, so that the suction cups 168 extend vertically upward as they pass the topmost edge of the turret 160, at position P. Similarly, the suction cups 168 extend horizontally outward as they pass the bottom of the turret at location D.

A plurality of electronic control valves 176a, 176b, 176c and 176d (only 176a and 176c being illustrated) one associated with each pick-up head 166 are further mounted on carrier 162. Each electronic control valve 176 is in electronic communication with PLC1 15 and in flow communication with a source of pressurised air and an input of an associated vacuum generator 170 of an associated pick up head 166. A slip ring 178 brings electronic signals from PLC1 15 to the rotating carrier 162, and therefore to control valves 176. Pressurised air is brought to rotating valves 176 through central shaft 164. A servo motor 180 is also interconnected with a central shaft 164 to rotate the carrier about its axis in a counter-clockwise direction, preferably at about 50 rpm. At the top point of rotation of the carrier, P, the vertically extending suction cups 168 are tangent to the overhead vacuum conveyor 130, as shown in FIG. 9A. PLC1 15 controls the presence or absence of suction at the suction cups at this top pick up point P. If a formed bag moving along vacuum conveyor 130 is suitable for pick up, the suction at the tangent pick-up head 166 will be activated, and in combination with the blow-off pressure at the overhead vacuum conveyor 130 will cause a bag to be picked up by the moving suction cup 168 at location P.

A guide-rail 182 (FIG. 9a) extends around the periphery of the inclined turret 160 from the top pick-up point P to a bottommost drop off point D. Accordingly, a bag picked up at the pick-up point, P, is guided by the guide rail 182 until it reaches the bottom of the inclined conveyor to its drop off point, D. At this point the bag will have been moved to have an orientation which is in a vertical plane with forward and rearward facing horizontal openings, as best illustrated in FIG. 10. It is worth noting that at pick-up location P the formed bag previously had an orientation in a generally horizontal plane with forward and rearward facing horizontal openings. Thus, the bag having a longitudinal axis is rotated about that longitudinal axis during the movement on inclined turret from pick-up location P to drop off location D. At the drop off location D, PLC1 15 releases suction at a previously actuated control valve associated with the pick-up member 166 that is proximate the drop-off location D, to release a bag.

Inclined turret 160 further comprises an electromechanical resolver and two optical sensors in communication with PLC1 15, used by PLC1 15 to determine the orientation of turret 160. Specifically, two optical sensors are directed at disc 161, as illustrated in FIG. 10. Disc 161 comprises six markings or holes, equally spaced at the same radial position about the disc's axis of rotation, and thus arranged in a circular pattern on the disc. A further single marking is also on the disc, at a different radial position. One optical sensor conveys electronic signals to PLC1 15 in response to detecting each of the first six markings in the circular pattern. The remaining optical sensor is aimed at the remaining single marking, and sends an electronic signal to PLC1 15 in response to detecting the remaining marking, once for every rotation of the disc 161.

A shaft of the electromechanical resolver is interconnected with the centre shaft of the rotating turret 160, and geared through belts to rotate six times for each rotation of turret 160 about its axis. For every degree of rotation of the resolver's shaft, the resolver outputs a signal that may be used by PLC1 15 in order to assess the position of any pick-up head on turret 160.

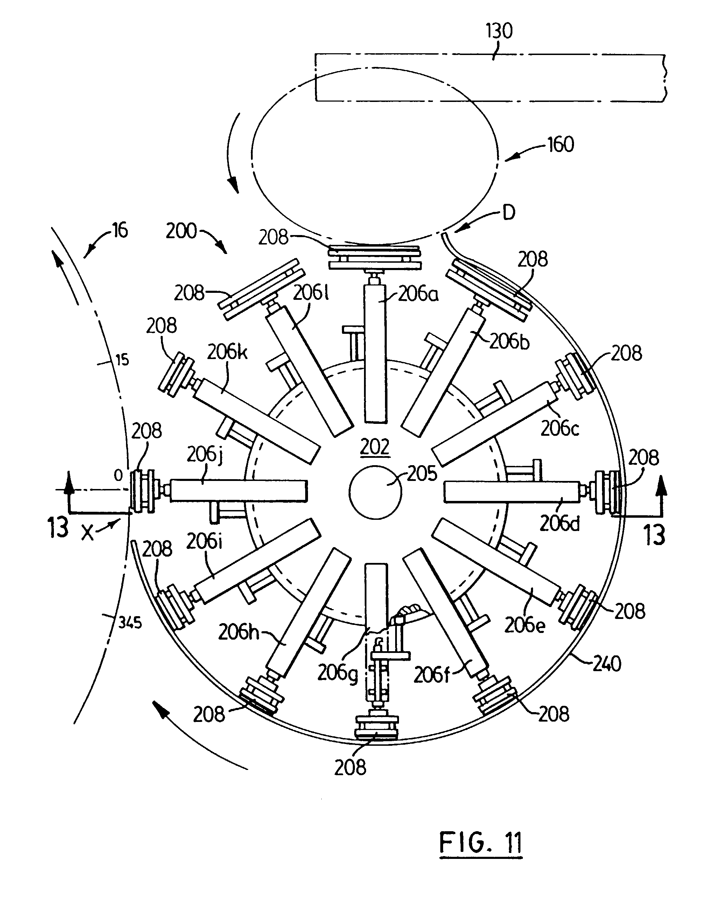

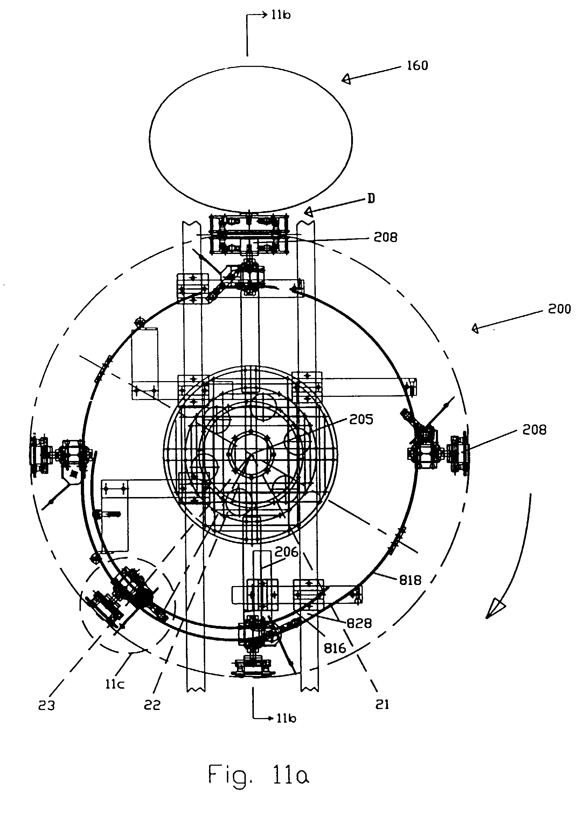

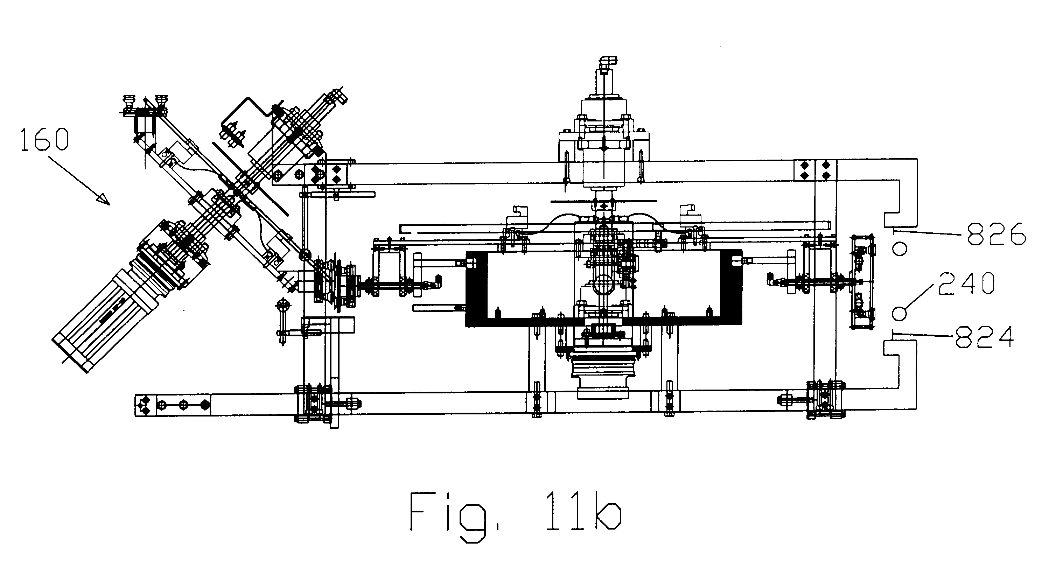

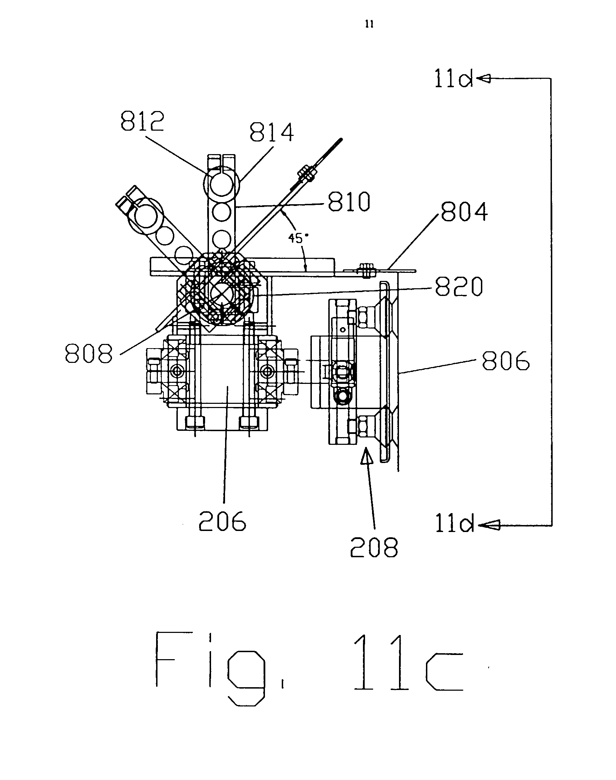

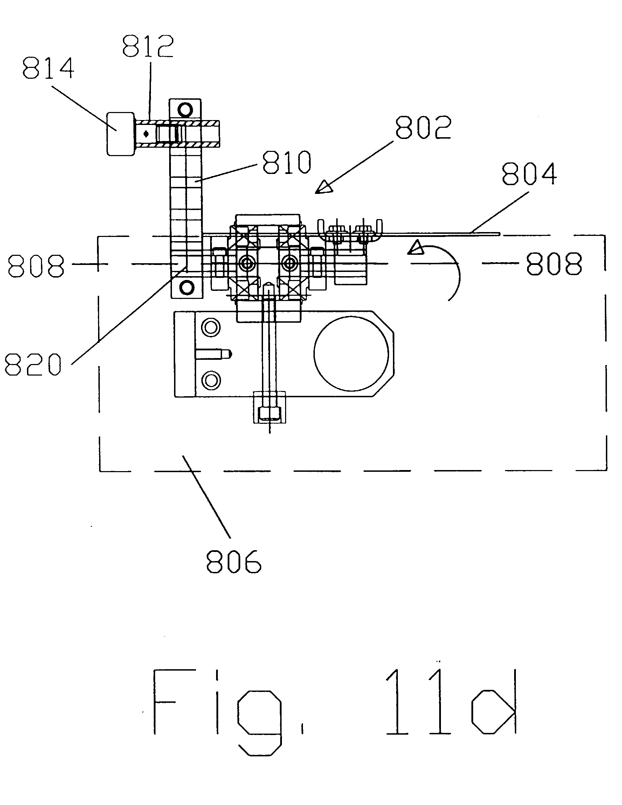

Located adjacent to inclined turret 160, is a horizontal conveyor turret 200 illustrated in FIGS. 10 to 14. Horizontal conveyor turret 200 transports bags from inclined transport turret 160 to bag filling, sealing and folding station 16 (FIG. 1), as illustrated in FIG. 11.

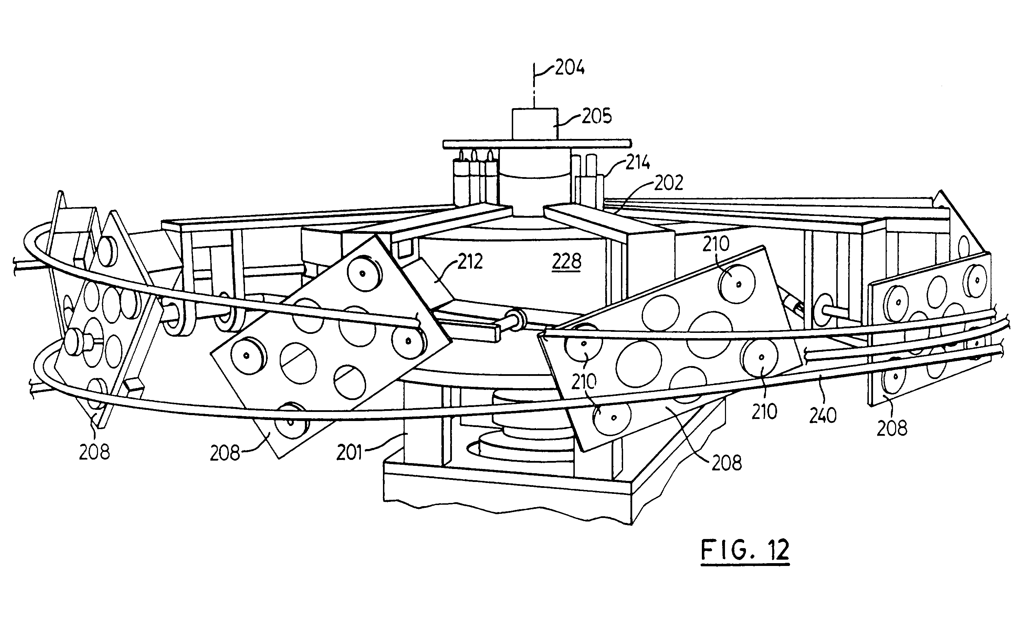

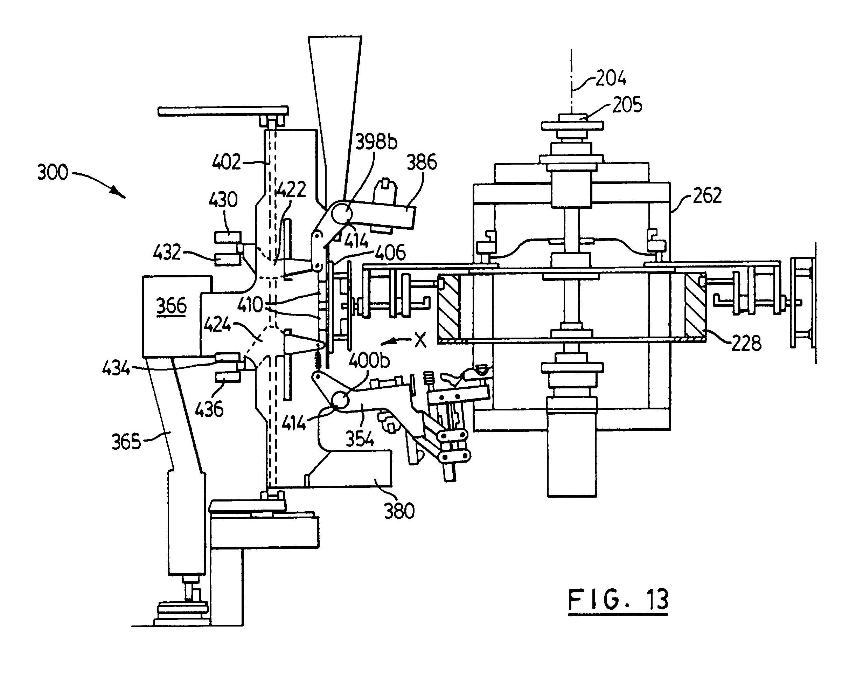

Conveyer turret 200 comprises a horizontal carrier 202 rotatably mounted for rotation with a central shaft 205, that is rotatable about vertical axis 204 on a frame 201 (FIGS. 12, 13). A motor (not shown) continuously rotates carrier 202, preferably at a rate of about 25 rpm. Extending radially outward from horizontal carrier 202 are twelve pick up arms 206a-2061 (individually and collectively 206). Each pick up arm 206 has at its end, a generally rectangular pick-up plate 208, best illustrated in FIG. 12. Each pick-up plate 208 has four rubber suction cups 210 in flow communication with an associated vacuum generator 212 which is, in turn, in flow communication with a control valve 214 (FIG. 13) that is electrically interconnected with PLC1 15 (FIG. 1). Two vacuum generators 212 are proximate the back of a pick-up plate 208, are mounted proximate four interconnected suction cups, while each control valve 214 is mounted on carrier 202, proximate the axis 204 of rotation of carrier 202.

As illustrated in FIG. 10, an electromechanical resolver 230 is fixedly mounted on frame 201. Resolver 230 is preferably Electro Cam Model # -5275-11ADS. Resolver 230 is electronically connected with an input of PLC1 15 (FIG.1), and outputs an electronic pulse for every degree of rotation of its central shaft 232. Shaft 232 of resolver 230 is mechanically interconnected with the rotating shaft 205 of turret 200 by belts 234. Belts 234 are geared so that the rotating shaft 232 of resolver 230 rotates twelve times for each rotation of shaft 205 about its axis 204. Further, another optical sensor 236, is mounted atop frame 201. Optical sensor 236 is directed to sense a marking or opening on the top of one of a rotating disc 238. Disc 238 is fixed relative to shaft 205. In response to sensing the mark, the optical sensor 236 provides a signal to PLC1 15. Thus, PLC1 15 can detect exactly when the mark passes by the optical sensor. PLC1 15 can thus determine an orientation of shaft 205 and hence carrier 202 about axis 204.

Yet another second optical sensor 237 detects a single hole or marking on disc 238 identifying a particular pick-up arm 206. This signal is used by PLC1 15 to assess the absolute position of turret 200 about its central axis of rotation 205. Turret 160 is controlled in an identical fashion to turret 200. The position of pick-up heads 206 and 166 relative to their respective axes are phased to each other and to the main turret by the photo electric sensors 236 and 237.

As best illustrated in FIG. 10, each pick-up plate 208 on turret 200 is mounted on a radially extending rotating shaft 216 that extends away from the rear face of the pick-up plate 208 from near its centre, radially toward axis 204. Each shaft 216 is rotatably suspended from pick-up arm 206 by a mounting bracket 218. Each shaft 216 extends parallel to the radially extending pick-up arm 206 for free rotation about an axis extending radially from the carrier 202. Mounted at the end of the pivot shaft, distal pick-up plate 208, is a lever arm 220 that extends from shaft 206 in a direction away from the axis of rotation of shaft 206. A further cam shaft 222 extends radially toward carrier 202 from the opposite end of the lever arm 220. Cam shaft 222 is rotatable about its axis and has at its end a cam roller 224 that engages slot 226 within cam guide 228. Cam guide 228 is an annulus fixedly mounted about the axis of rotation of carrier 202 between the mounting brackets 218 and the central axis 204.

As further illustrated in FIG. 10, a generally horizontal plate 173 is positioned at drop-off point D. This plate assists in placement and orientation of a bag as it is transferred from turret 160 to turret 200. That is, as a moving bag approaches plate 173, the vacuum on an associated pick-up member 166 is turned off and the bag is allowed to fall downward onto the plate. Friction between the pick-up members 166 and the bag, will drive the bag forward to a proper position on the plate 173. The leading edge of the bag will actually pass below the level of the plate 173 as it approaches. Accordingly the leading edge of plate 173 is below the horizontal receiving plane to allow the leading edge of the bag to pass. Plate 173 is inclined upwardly so that the centre of a passing bag is aligned with the centre of the pick-up plate 208.

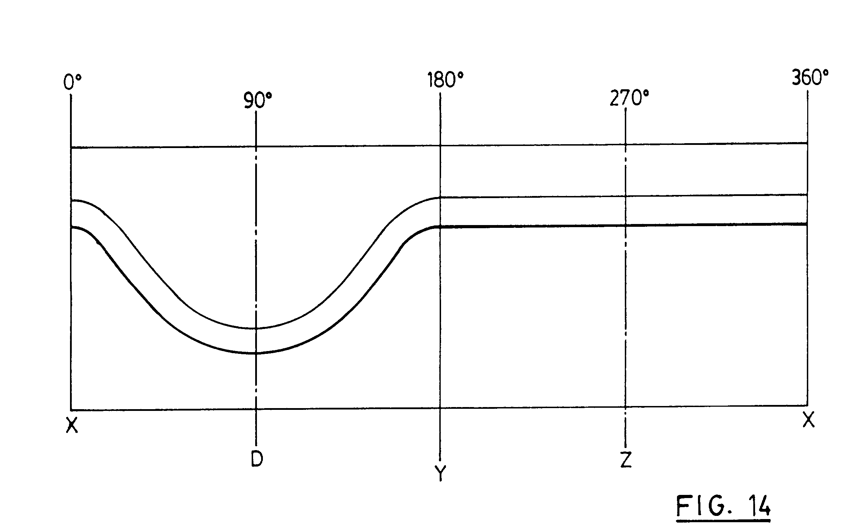

A two dimensional projection of cam slot 226 is illustrated in FIG. 14. As illustrated cam slot 228 is generally V-shaped, and therefore guides cam roller 224 up, down and up within the slot 224 as the cam roller 222 follows slot 226, which applies a rotating force about one end of the lever arm 220 thereby causing the lever arm 220 to rotate the outer rotating shaft 216 interconnected with the plate 208. Accordingly, as carrier 202 rotates about its central axis 205 as illustrated in FIG. 11, each of the pick-up plates 208 is rotated from a horizontal position to a vertical position as the turret rotates from position D to position Y, and there is a corresponding upward movement of cam roller in slot 226 as shown in FIGS. 12 and 14. At D a bag is retrieved from inclined turret 160 by the turret 200, and thereafter as turret 200 rotates, each pick-up plate 208 rotates back to the vertical position by the time turret 200 has reached position Y. As turret 200 rotates from position Y to position Z and back to position X, each plate 208 remains in a vertical orientation.

As described above, at the point D, tangent to the inclined turret 160, a pick-up plate 208 of the conveyer turret 200 will have a horizontal orientation, as illustrated in FIG. 10. At this point, PLC1 15 using a measurement through optical sensor 236 and resolver 230 activates the electronic control valve 214 associated with the pick-up plate 208 now located at point D. This pick-up plate 208, in turn grabs a bag released by inclined turret 160 at its point D. The bag is now conveyed by horizontal conveyer turret 200 to the drop-off location X at the periphery of the conveyer turret 200.

As the orientation of the pick-up plate 208 will be entirely vertical, as illustrated in FIG. 13, a bag is rotated from a horizontal orientation to a vertical orientation between pick-up and drop-off points D and X on horizontal conveyer turret 200. A guide-rail 240 illustrated in FIGS. 11 and 12 extends about the periphery of the conveyer turret 200 and further guides the outer, seamless edge of bags transported from the pick-up location D to drop-off location X by the horizontal conveyer turret 200.

Once a bag reaches the drop off location X, as determined by PLC1 15 (FIG. 1) using the provided position signals, PLC1 15 releases the control valve associated with the pick-up plate 208 now at location X thereby releasing the bag at the location X.

In FIGS. 11a, 11b, 11c and 11d enhancements to turret 200 are illustrated. For simplicity in Figure 11a, a single pick-up plate 208 and related assembly are shown in five separate positions of rotation about central axis 205 of turret 200. In addition to the pick-up plate assembly comprised of pick-up arm 206, shaft 216, lever arm 220 and cam shaft 222, a finger plate assembly 802 is also provided and is mounted on pick-up arm 206. Finger plate assembly comprises a rectangular finger plate 804 which is fixedly mounted to a shaft 820 for rotation about axis 808 relative to pick-up arm 206. A finger assembly lever arm 810 is also fixedly mounted on shaft 820, at a generally right angle to finger plate 804. Mounted on lever arm 810 is a cam roller 814 which is receivable into a cam track or cam slot 828 formed by an inner rail 816 and an outer rail 818. Inner rail 816 and outer rail 818 are both fixedly mounted on the top of the frame of turret 200. Both lever arm 810 and finger plate 804 rotate with shaft 820 about finger assembly axis 808.

Outer rail 818 extends in a curvilinear closed path around axis 205 of turret 200. From an angular position X around to position Z1, outer rail 818 follows a generally circular path. The position of cam roller 814, as it moves through this portion of the track between angular position X and angular position Zl as turret 200 rotates, is such that finger plate 804 and lever arm 810 are in the shadow-lined positions shown in Figure 11c and Figure 11d.

At approximately angular position Z1, outer rail 818 bulges outward from a circular path. The outer rail 818 is complemented by an inner rail 816 which follows a similar curvilinear inside path between angular position Z1 and angular position X.

Beneath outer rail 240 and the face of pick-up plate 208 extends a curvilinear flat lower plate 824. Furthermore, above outer rail 240 and the face of pick-up plate 208 extends a curvilinear flat upper plate 826. Outer rail 240, upper plate 826 and lower plate 824 thus act as guides to maintain a bag in close proximity to the face of pick-up plate 208 when vacuum is not applied to the face. Plates 824 and 826 traverse the angular arc from at least position Z1 to at least past position Z3 where vacuum is reapplied to the bag as described hereinafter.

A bag when transferred from turret 160 to a pick-up plate 208 of turret 200 may not be properly aligned. Accordingly, although when a pick-up plate 208 reaches angular position Y it will be in a vertical orientation, the corresponding bag held by that pick-up plate may not be properly vertically and horizontally aligned thereon.

As the turret 200 rotates, each pick-up plate 208 will pass from angular position Y to angular position Z1. At, or shortly after a particular pick-up plate 208 has passed angular position Z1, an optical sensor provides a signal to PLC1 15 to release the control valve associated with that pick-up plate 208, thereby releasing the bag (in this case a bag 806 shown in shadow outline in FIGS. 11c and 11d). Once moving along cam track 828, due to the bulge in the slot from a circular path, the cam roller 814 causes the lever arm 810 to rotate along with finger plate assembly 802 and shaft 820 about axis 808. Once pick-up plate 208 has reached the position shown just past angular position Z2, finger plate 804 will have been rotated from the shadow position to the solid line position, shown in FIGS. 11c and 11d.

It will be appreciated that a bag 806 is thus trapped between the outer rail 240, the face of pick-up plate 208, and between finger plate 804, lower plate 824 and upper plate 826. The lower plate 824 and upper plate 826 are spaced vertically so that bag 806 is pushed into a proper vertical orientation in relation to pick-up plate 208. At position Z3, finger plate 804 having moved to the solid line position in FIGS 11c and 11d, ensures that that the horizontal orientation of the bag 806 in relation to pick-up plate 208 is proper, as friction causes the trailing vertical edge of bag 806 to abut the face of finger plate 804. Thereafter as the turret rotates towards drop off location X, the path of cam slot 828 is such that cam roller 814 is moved inward relative to the front face of pick-up plate 208, thus rotating both lever arm 810 and finger plate 804 about axis 808, moving finger plate 804 to the retracted position shown at position X in Figure 11a (the shadow position in Figure 11c). Also, as pick-up plate 208 moves from the position at or just past position Z3, and just before the finger plate 804 starts to retract, PLC1 15 receives another signal from another optical sensor and then activates the control valve and thus the vacuum will be reapplied to the bag to hold the bag in its proper, reoriented position, until it reaches the drop off location X.

As finger plate 804 is retracted at both bag loading position D of turret 200, and bag drop-off position X of turret 200, it does not interfere with the transfer of bags from turret 160 and to turret 300. The alignment of the bag 806 on pick-up plate 208 occurs in positions intermediate positions D and X.

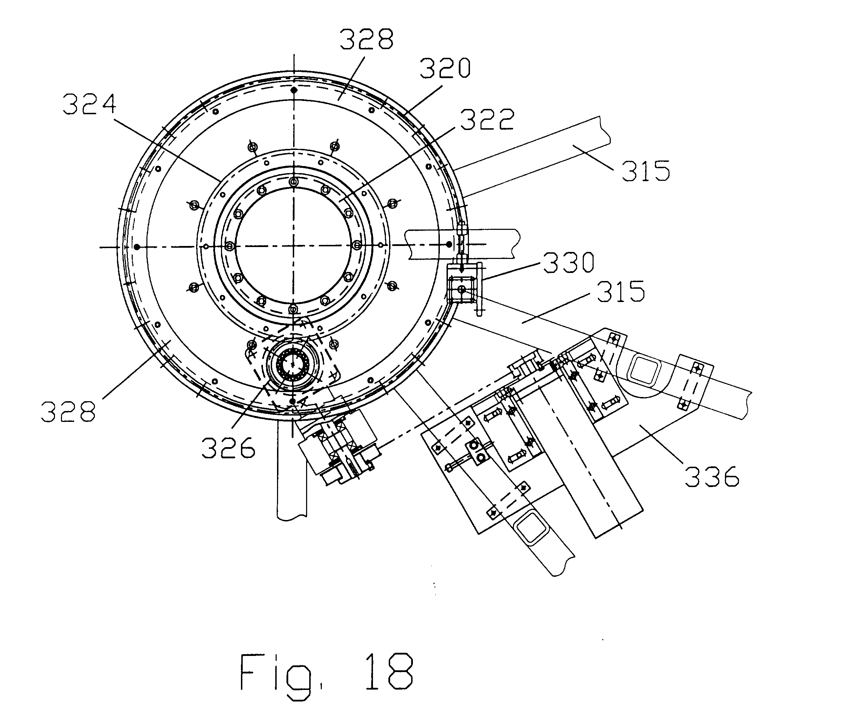

At drop-off location X, a formed bag is transferred from the horizontal conveyor turret 200 to bag filling, sealing and folding station 16. Station 16 comprises main turret 300 as best illustrated in FIGS. 13 and 15 to 20.

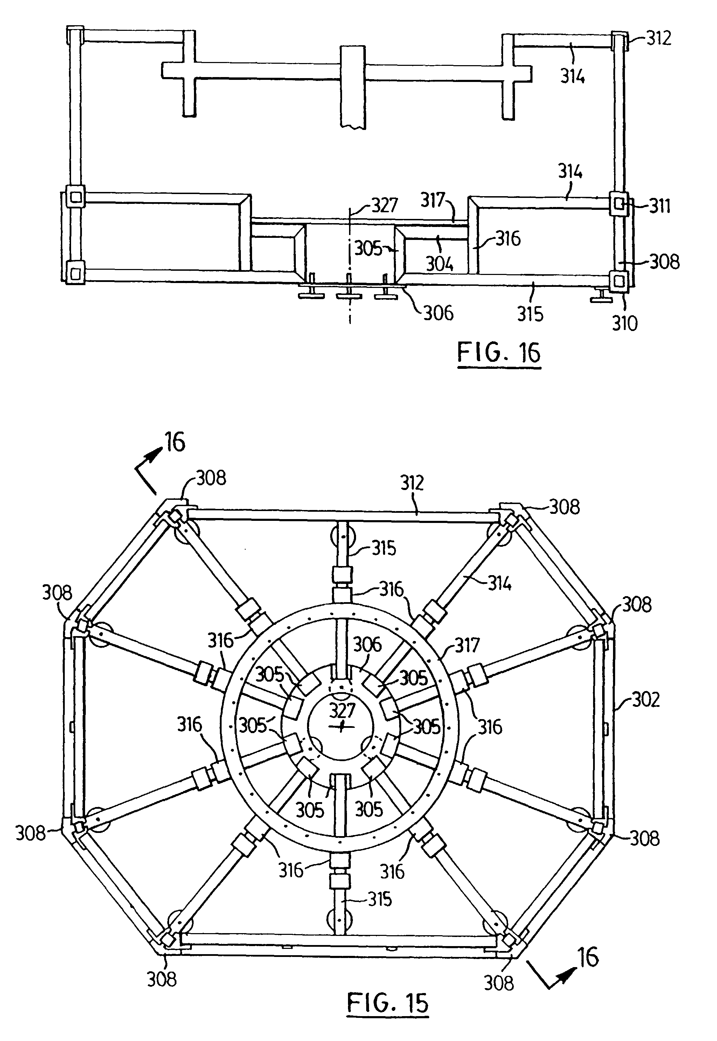

Main turret 300 comprises a frame 302, schematically illustrated in FIGS. 15 and 16. Eight upwardly extending legs 308 encircle a circular base 306 to form a generally octagonal periphery. Legs 308 are interconnected by lower, middle and upper connecting beams 310, 311 and 312. Extending radially inward from each leg 308 is a top radial beam 314 and a bottom radial beam 315. Each of radial beams 314 extends part way toward the centre of the circular base 306 and is interconnected with inner leg 316. Extending outward from each leg 316 is an inwardly directed inner radial beam 304 that extends to a leg 305, proximate the outer edge of circular base 306. A circular mid-ring 317, also concentric with the circular base 306, rests atop beams 304.

A plurality of base plates 318, illustrated in FIG. 19, are mounted atop outer radial beams 314 (FIGS. 15 and 16) of frame 302. These base plates 318 support lower guide 354 and cam tracks 356 (FIG. 19). At the centre of each of the top connecting beams 312, L-shaped support arm 319 extends inwardly and downwardly. L-shaped arms create an anti-rotation force that supports a hanging annular ring 321 that supports upper cam tracks or guides 360 and an upper bucket guide track 362. A horizontal beam 349 extends outwardly to further support annular ring 321 and sits atop of taper roller bearings 347.

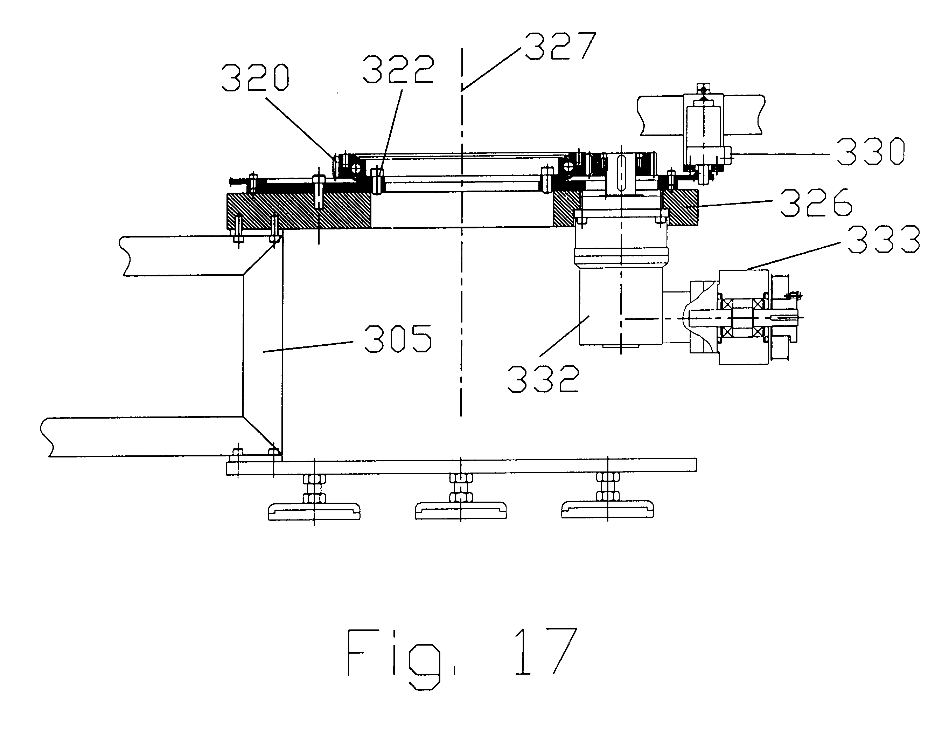

As illustrated in FIGS. 17, 18 and 19, a slew ring 320 comprising a bearing 322 and an outer gear 324 forms part of turret 300 and is mounted about a central axis 327 extends from the centre of circular base 306. A pinion gear 326 engages the outer gear 324 of slew ring 320. Slew ring 320 rotates with outer gear 324. An annular spacer plate 355 supports the inner stationary ring of bearing 322.

Circular mid ring 317 rests on beam 304. Ring 317 provides support for a bucket support 366.

Further extending about slew ring 320 and pinion gear 326 is a further outer annular gear 328. A right angle planetary gear extender 332 extends downward from pinion gear 326. Gear extender 332 terminates with a spindle that is interconnected with a belt drive 334 that in turn is interconnected with a servo motor 336 suitable to rotate the main turret in a counter clockwise direction, preferably at a rate of 12 rpm.

Another electromechanical resolver 330 is mounted to rotate with and about outer annular gear 328. The gear ratios of resolver 330, outer annular gear 328 and pinion gear 326 are such that the rotating shaft of resolver 330 rotates about its axis twenty-five times for each rotation of the slew ring about central axis 327.

Further mounted on the bottom of turret 300 are five metering pumps 367. Each metering pump 367, is interconnected with five buckets on the periphery of turret 300. A central fluid supply hose 348 extends upwardly from the bottom of shaft 342 to the top of the rotating carrier 340 to a first fluid distribution manifold 351. Outlets of distribution manifold 351 are in flow communication with each of the metering pumps. The outlet of each metering pump is further interconnected with a five output fluid distribution manifold. Each of these outputs, is in turn interconnected with hoses 348 to provide fluid proximate each rotating bucket, as further explained below.

Further, an air supply hose 352 having a rotary coupling at one end extends through the top of shaft 342. The pressurised air hose 352 again extends radially outward from the centre shaft 342, to distribution manifolds supplying individual bucket mounts 366.

The main turret 300 consists of ten radial spokes 340 interconnected on the outer perimeter by upper and lower connecting plates 341a and 341b. On these connecting plates are mounted twenty-five identical bucket mount castings 365. The ten spokes 340 are mounted about the interior perimeter of a slew ring top plate 341a, which in turn is mounted on the driven rotating ring of the slewing ring 322. Also, mounted on the top plate 341a is a hollow, rotating centre column 342 which extends vertically upward. Attached to, and extending down from, the centre column 342 is a smaller hollow shaft 342b.

Onto the exterior of this rotating shaft 342b is mounted an electrical slip ring 346, the exterior ring of which is held stationary from rotation by attachment to stationary slew ring support 326. The hollow centre of the shaft 342b is necessary for oil supply to the rotating turret. Also mounted on the rotating portion of carrier 300, is a secondary programmable logic controller 307("PLC2"). As will become apparent, PLC2 307 is used to control and monitor operating parameters on rotating portion of turret 300, thereby reducing the number of signals required to be transferred from primary PLC1 15 to the rotating portion of main turret 300. Operating parameters of each metering pump 367 may, for example, be controlled by PLC2 307.

A total of about five wires carrying signals using the Allen Bradley Data Highway Protocol, as understood by those skilled in the art, carry signals from PLC1 15 to PLC2 307 by way of slip ring 346. Conveniently, second PLC2 307 is interconnected with electrical control valves and temperature controllers on buckets 380, forming part of main turret 300. As buckets 380 and PLC2 307 are stationary relative to each other, the provision of electrical signals between PLC2 307 and buckets 380 by wires, stationary relative to the rotating portion of turret 300, is straightforward. Moreover, by using known data highway protocol, communication between PLC1 15 and PLC2 307 is enabled. Moreover, as the data highway protocol is primarily a serial protocol, relatively few physical wires are required to provide signals from stationary PLC1 15 to rotating PLC2 307, by way of slip ring 346. As should be appreciated, use of a single PLC1 15 would require a large assortment of control signals, and therefore a large number of control wires from PLC1 to rotating portion of carrier 300.

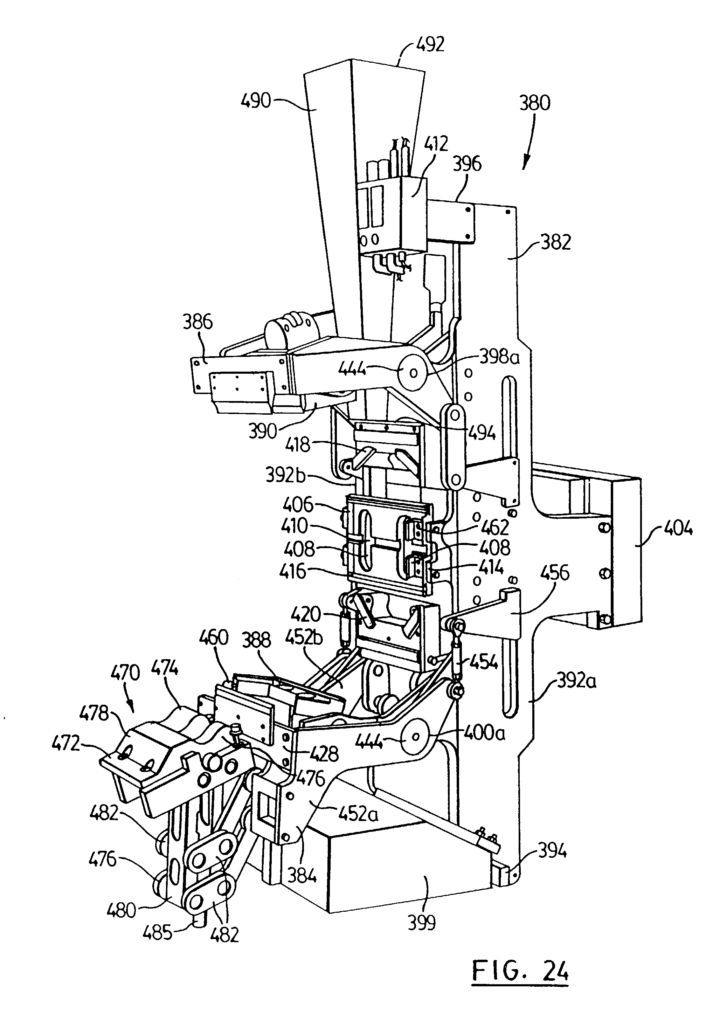

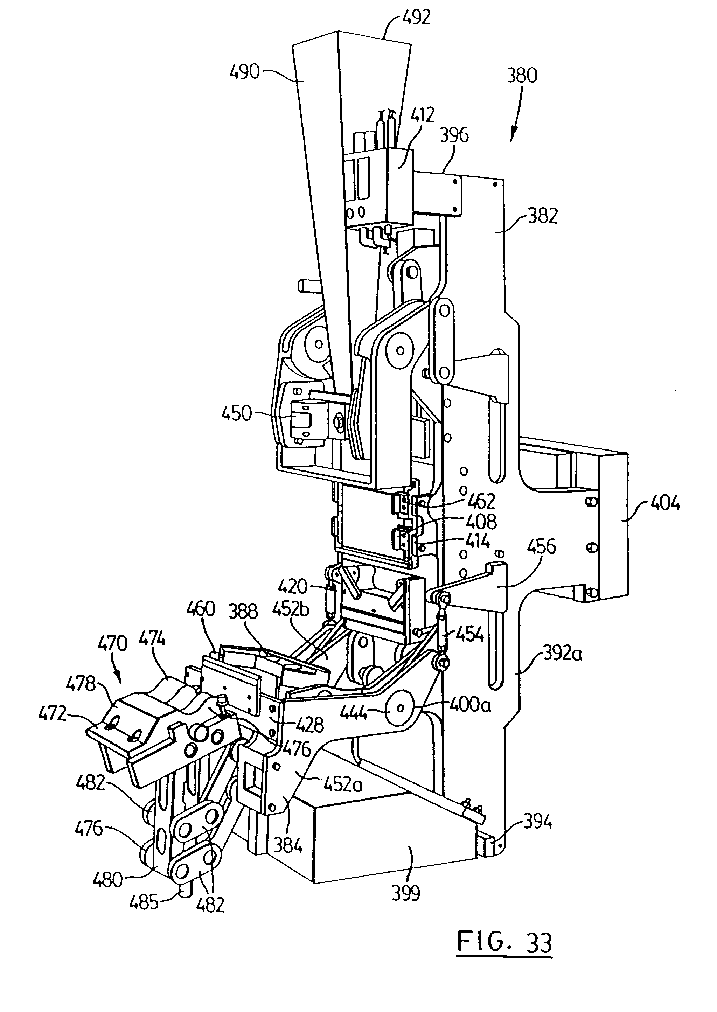

Also mounted on the outer connecting plates 341a and 341b are twenty-five outwardly extending castings 365 each having a bucket support head 366 that comprises suitable fittings to engage the rear of a bag folding, filling and sealing bucket 380, more particularly illustrated in FIGS. 24 to 35. Each casting 365 extends between upper and lower pairs of cam tracks 356 and 360.

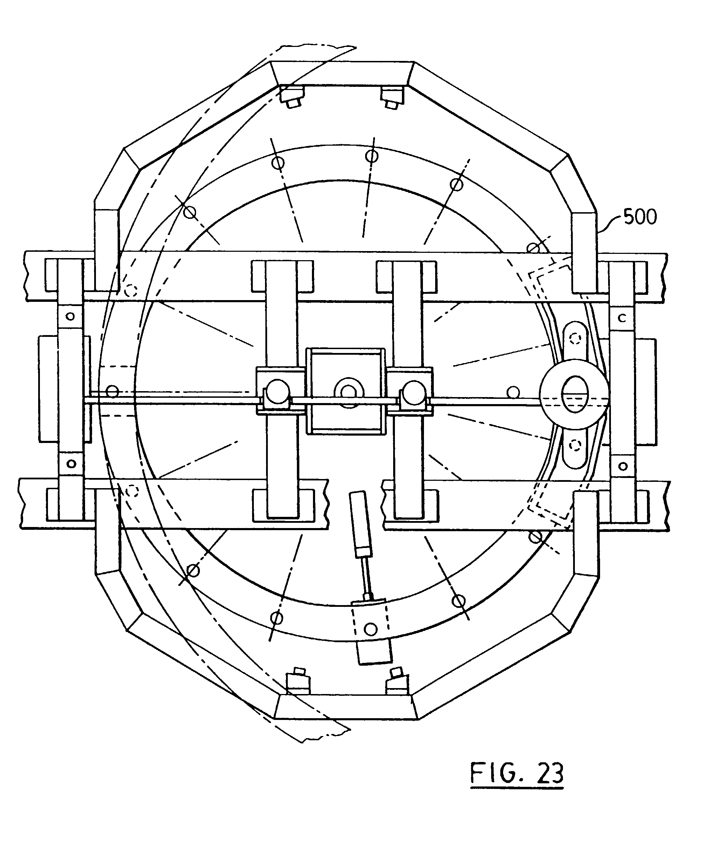

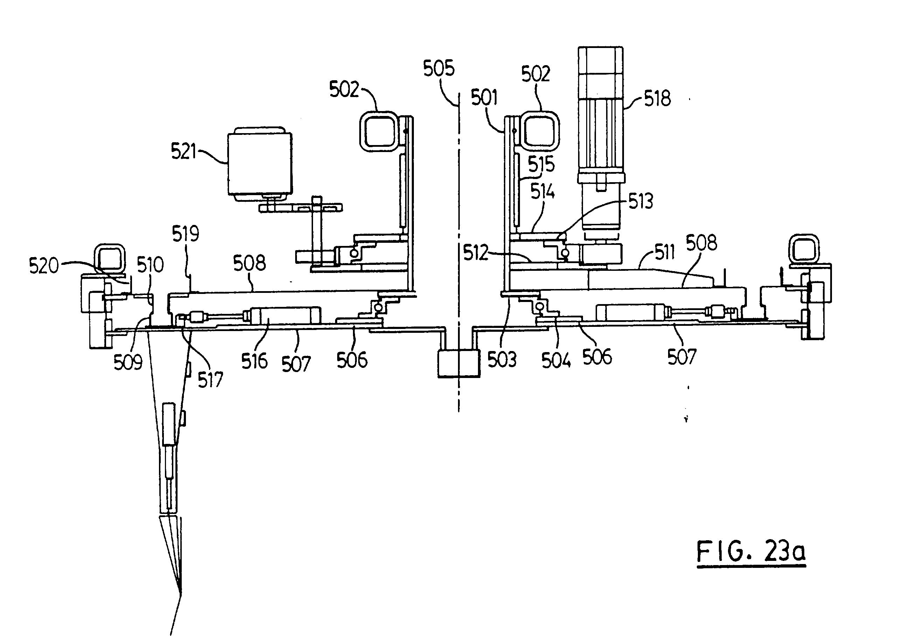

FIGS. 23 and 23a illustrate a rotary volumetric filler 500, also illustrated in FIG. 19. Filler 500 includes a hollow centre post 501, having centre axis 505, supported by two horizontal beams 502 which are connected to the outer frame of turret 300 (FIG. 19). A base plate 503 connects centre post 501 to a further lower slewing ring 504. These are fixed relative to each other. The lower portion of slewing ring 504 is free to rotate about the centre axis 505 of centre post 501. The slewing ring is connected to a base ring 506, which is in turn attached to a lower table 507. Connected to the lower table 507 by vertically projected pins (not shown) is an upper table 508. The two tables are interconnected to rotate in tandem, but are free for independent vertical motion, to permit a change in volume of the cups 509, 510. Upper table 508 may be raised and lowered relative to lower table 507, by a servo motor drive (not shown) with four interconnecting actuators (also not shown). Raising the upper table will also raise the attached upper cups 510 positioned equally in fifteen positions around the perimeter of the upper table 508. This raising of the table is supported by a mid support 511, which is connected to base plate 512 of the upper slewing ring 513. The upper slewing ring 513 includes an outer ring, which rotates and has gear teeth on its outer perimeter, and an inner ring which is fixed from rotation, by a base plate 514 connected to a linear slide 515 sliding vertically up and down the centre post 501 but restricted from rotary motion, by the square design of the centre post 501. The outer ring of the upper slewing ring is driven by a servo drive 518 and the lower table is driven by the vertical pins (not shown). The direction of travel is anti-clockwise at a preferred speed of 20 rpm.

The base of each cup 509 may be withdrawn by a pneumatic actuator 516 connected to a slide gate 517 which is withdrawn from the base of the cup. Removing slide gate 517 permits the contents of an associated cup to be released, by gravity, from the interior of the cup 509, 510. When the contents have fallen from the cup the slide gate is once again closed. A slide gate 517 is only opened, when a properly opened bag is travelling under the cup's opening in the base (70° to 110° of main turret, cup is over bag - this equates to 65° of filler rotation because it is a smaller diameter turret).

The product to be filled, and measured by the cup's volume, into the cups is fed by gravity from an overhead storage tank, between the fill guides 519, 520 on the upper table. The rotation of the table causes the product to fill the cavity above the cups. Downwardly extending brushes surround the fill tube from the overhead supply tank and remove excess material from each cup. The filled cup rotates into position and in phase with the rotating and opened bag below it and the slide gate is withdrawn and the contents dropped into the bag.

A separate rotary encoder 521 is interconnected with filler turret 500. Encoder 521 is fixed to the stationary portion of turret 300 and is geared so that one revolution of encoder equals one cup pitch. The output of encoder 521 is interconnected with PLC1 15. PLC1 15 further controls, electronic valves interconnected to vacuum generators controlling the actuation of gates 517. Similarly, PLC1 15 controls the servo motor that adjusts the relative position of tables 507 and 508.

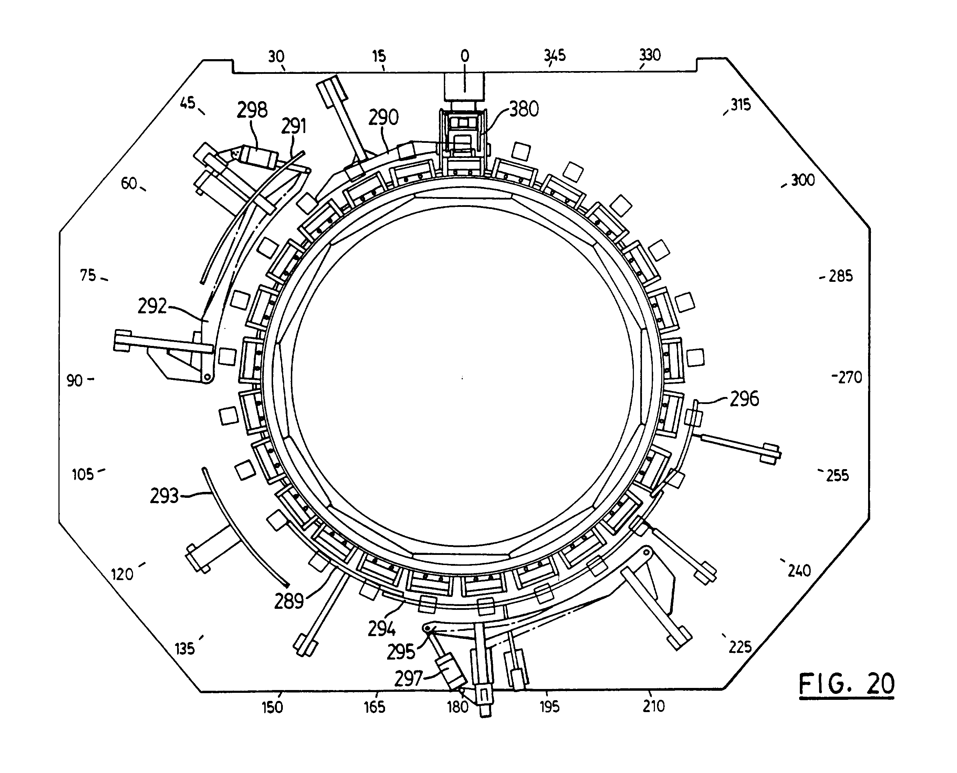

Outer rails illustrated in FIG. 20 extend partway about the periphery of turret 300. Specifically, bag in feed rail 290 extends counter-clockwise between 0° and 30° measured about axis 327 relative to location X. Bag opening rail 291 extends from 35° to 65°. Lower seal pressure rail 292 extends between 35° and 90°. Rail 292 is biased radially inward by pistons 298 to provide for adjustable seal pressure. Further, a bag closing rail 293 extends between about 105° and 140°. A bag retaining rail 289 extends between about 125° and 165°. A lower bag folding rail 294 extends between 175° and 225°. Upper seal pressure rail 295 is biased radially inward by piston 297, to provide for adjustable seal pressure. An upper fold rail 296 extends between 240° and 265°. A bag stripper (not shown) at 270° ejects the folded bag. Rails are mounted by a cantilever support to avoid interference with bucket extremities.

A bucket 380 may be mounted on the casting 365 with the bucket's associated cam followers engaging slots of the upper and lower cam tracks 360 and 356 respectively, radially inward of rails 290 to 296. As the carrier 340 rotates about central axis 327, a bucket 380 mounted to casting 365 will similarly rotate about the central axis with its base resting within a guide track on the base support plates 318.

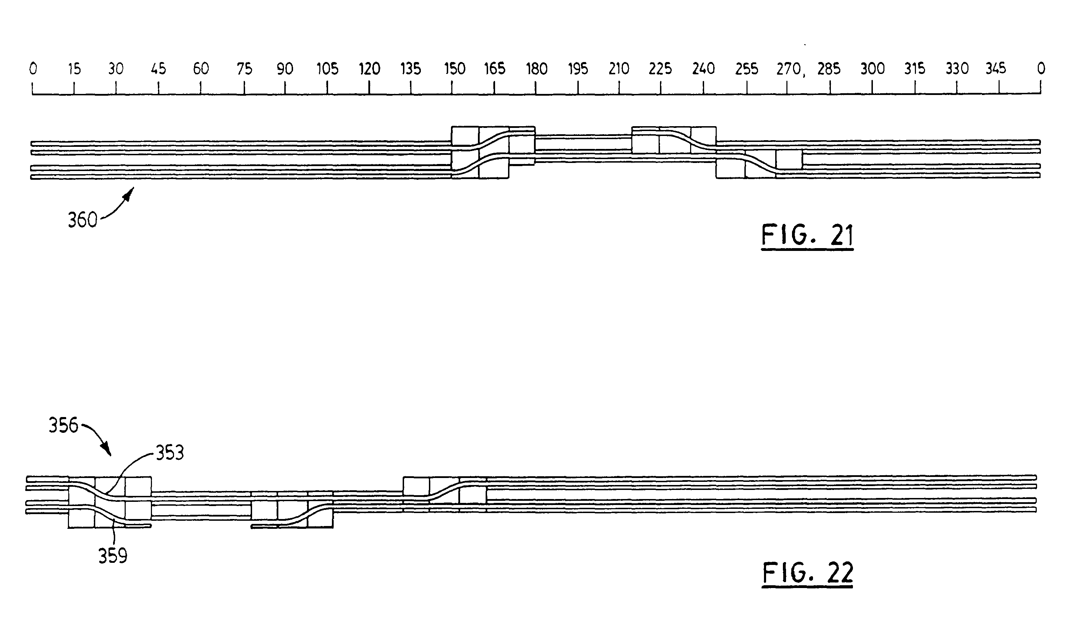

The arrangement of the upper and lower cam tracks about the central axis is illustrated in FIGS. 21 and 22, respectively. In FIG.22 the cam track for the lower crimping bar assembly is shown at 353 and that for the lower sealing bar assembly at 359. Degree markings in FIGS. 21 and 22 are measured about axis 327, with 0° measured at point X (FIG. 20).

A filling, folding and sealing bucket 380, is more particularly illustrated in FIGS. 24 to 35. Each bucket 380 comprises a main bucket assembly 382 on which are mounted bottom and top crimping assemblies 384, 386 and heat sealing assemblies 388, 390.

Specifically, main bucket assembly or base 382 comprises a pair of spaced parallel side plates 392a and 392b interconnected by bottom and top front plates 394 and 396. Top crimping assembly 386 and heat sealing assembly 390 are co-mounted on left and right pivot pins 398a and 398b (best seen in FIGS. 13 and 24). Similarly, bottom crimping assembly 384 and heat sealing assembly 388 are co-mounted on left and right pivot pins 400a and 400b (also best viewed in FIGS. 13 and 19). Stretching vertically between the opposed side plates 392a and 392b is a support rod 402 (best illustrated in FIG. 13) mounted toward the rear of the main bucket assembly 382. The main bucket assembly 382 also has a rear support plate 404 extending between the opposed side plates 392a and 392b. Rear support plate 404 includes electric and pneumatic connectors (not shown), for removably connecting bucket 380 to complementary connectors on the ends of castings 365 of turret 300 (FIG. 13).

Mounted about the vertical support rod 402 by way of non-rotating linear bearing (not shown) are upper and lower carriages 422 and 424 to which cam rollers of the crimping and sealing assemblies are attached.

At the lower portion of bucket 380 is an electrical box 399 which provides for electrical power distribution to the vacuum generators 412, heaters and other electrical components.

Further extending laterally between side plates 392a and 392b is a front bag support plate 406. Front plate 406 has a pair of openings 408 through which a plurality of suction cups 410 extend. Suction is provided to the suction cups 410 by PLC2 307 through two vacuum generators 412 with integral solenoid valves and vacuum sensors. Vacuum generators 412 may be FESTO vacuum generators model number VADM-140-P. One generator is used for holding bags in buckets and the other in connection with the bag opener. Pressurised air is supplied to the vacuum generators through back connector on plate 404. The pressurised air is converted to vacuum that provides the vacuum suction force behind the front plate 406. Vacuum generators 412 are also adapted to provide pressurised air blow, used as "blow off" air at suction cups 410 as a bag is removed from turret 300, when vacuum release is required at front plate 406 when a bag is ejected, or when a bag is closed by the bag opener. Front plate 406 also has on its front face a pair of outwardly extending edges 414 and 416 that act as stops for a bag placed upon the front plate 406. As will become apparent, a bag may be sucked against front plate 406.

Mounted just above and below front plate 406 are upper and lower sealing plates 418 and 420. Upper and lower sealing plates 418 and 420 are mounted so that faces of upper and lower heat sealing assemblies 388 and 390 engage the upper and lower sealing plates 418 and 420, respectively, when they are pivoted inward toward plate 406. Each of the upper and lower sealing plates 418 and 420 comprises a rubber sealing pad and is available through LARO TOOL MGF. LTD. of Perrysberg, Ohio, USA. These rubber pads have corrugated surfaces and resiliently engage complementary surfaces on assemblies 388 and 390.

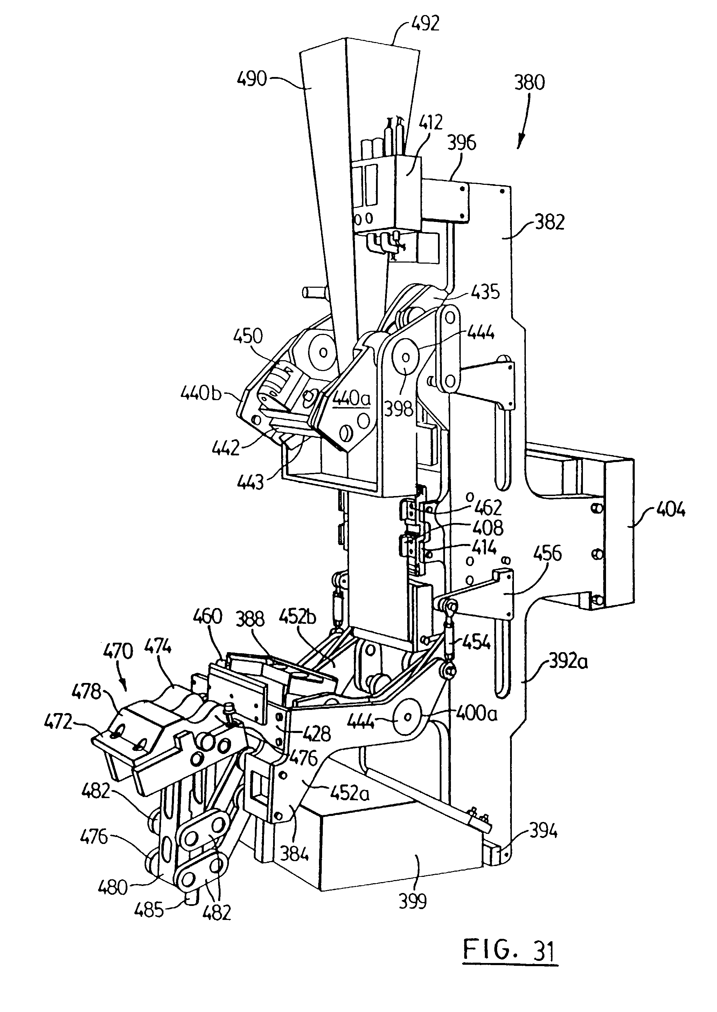

As best viewed in FIG. 31, upper heat sealing assembly 390 comprises right and left hand arm sections 440a and 440b interconnected by a heated sealing bar 442 that stretches between these arm sections. Upper heat sealing assembly 390 is pivotally mounted about pivot pins 398a and 398b by way of annular bearings 444. Upper sealing assembly comprises a cam follower 430 guided for movement up and down on rod 402 on the main bucket assembly 380.

Sealing bar 442 comprises mounting plates which are secured to the arm sections 440a and 440b, interconnected by a transversely mounted front plate 443. Thus, a sealing bar assembly when pivoted about the main bearing 444, can bring the sealing plate into abutment with the sealing plate 418 on the main bucket assembly 382. Mounted on the front plate 443 is a sealing plate which is complementary to the sealing pads 418 on main bucket assembly 380. Also, each of the sealing pads is provided with an electric cartridge heater powered by a solid state relay, controlled by a temperature controller housed in electrical box 399 through a thermocouple embedded in the sealing bar 442. Each heater is kept at a constant set point temperature, which may be set independently of the set-point temperature of other heaters on a bucket of turret 300.

Each temperature controller optionally includes a temperature display. Set point signals for each temperature controller are provided through a rack mount programmable logic controller interface, that is mounted to and thus forms part of PLC2 307. PLC1 15 through the data highway interconnection, may in turn independently control the set points of each of the temperature controllers at PLC2 307.

Mounted on the rear side of front plate 433 is a pressure roller 450. As will become apparent, roller 450 is used to engage an outer rail 295 (FIG. 20) on a portion of the periphery of main turret 300.

Lower heat sealing assembly 388 is substantially identical to the upper heat sealing assembly 390. Outer rail 291 engages a roller identical to roller 450.

Further mounted on the main bucket assembly are two substantially identical pivoting crimping assemblies 384 and 386. Crimping assembly 384 comprises two opposed side plates 452a and 452b that are pivotally mounted about pivot pins 400a and 400b that also support the lower sealing assembly 388. Extending from the end of each side plate 452a and 452b is a pivotally mounted link-arm 454 that is, in turn, pivotally mounted at its other end through carriage 456 that is mounted about the main vertical rod 402.

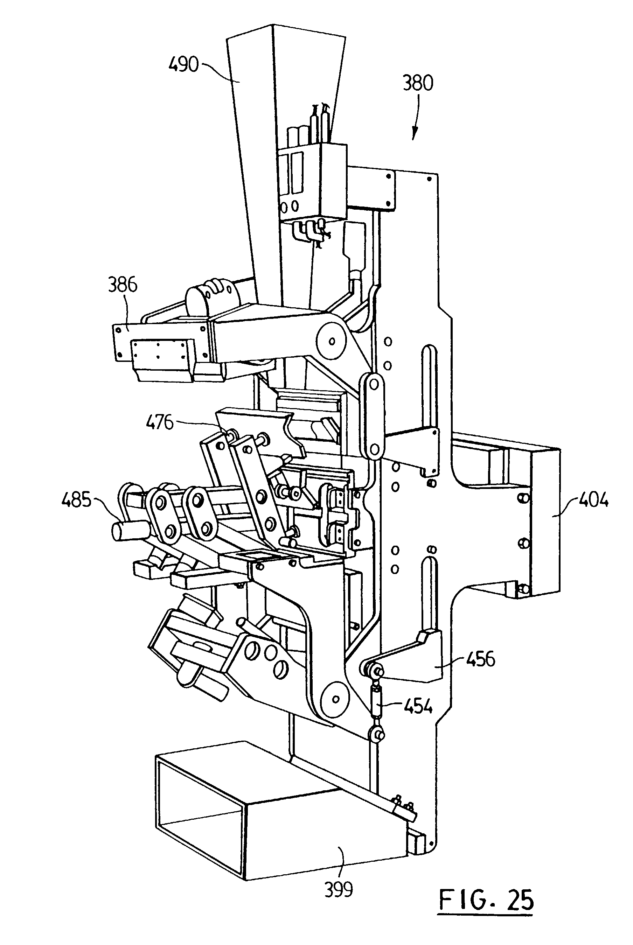

Also, mounted on carriage 456 is a cam follower 430 (FIG. 13) that guides the carriage 456 up and down along the supporting rod 372. Mounted at the front end of, and between, side plates 422a and 422b is a blade support 428. Mounted on blade support 428 is an outwardly extending crimping blade 460 having a crimping edge. Crimping blade 460 pivots from a substantially vertical orientation (FIG. 24) to a substantially horizontal orientation (FIG. 25) whereat blade 460 abuts a transversely extending rubber bumper strip 462 on the front face of the front plate 406 of the bucket 380.

Also, mounted on the front face of the bottom crimping assembly 384 is a bag opening assembly 470. Bag opening assembly 470 comprises a bag opening plate 472 and a pivotally mounted bag conditioning plate 474, both mounted on a pair of mounting bars 476. Both the bag opening plate 472 and the bag conditioning plate 474 are made of a plastic, in contrast to the other major components of the bucket 380 which are formed of a metal such as stainless steel, aluminium or brass. Four suction cups 478 further form part of bag opening assembly 470. Two of these are mounted to extend in openings located in the bag opening plate 472. The two remaining suction cups are located behind the pivotally mounted bag conditioning plate 474. The suction cups 478 are in flow communication with vacuum generators 412 by way of a set of hoses (not shown) and under control of rotating PLC2 307.

Bag opening plate 472 has a profiled V-groove extending horizontally about suction cups 478. This V-groove forms a crease in a back panel of a bag as it is engaged by suction cups 478 and thereby opened. The action of creasing this panel ensures that the gussets attaching to the opening plate 472 are creased and thereby prevented from opening as assembly 470 pivots away from a bag retained on front plate 466. This is turn ensures product placed in an opened bag is biased between the panel retained at plate 406 and an intermediate gusset.

Mounting bars 476 are supported by two inwardly extending tie bars 480 to which the mounting bars 476 are pivotally secured. Tie bars 480 extend downward and are interconnected with opposing link arms 482 that, in turn, are pivotally connected to link arms 485. Extending from the bottom of tie bars 480 is a NYLATRON roller 484 that is used to engage rail 293 (FIG. 20) to move the bag opening assembly 470 relative to bottom crimping assembly 384. Additionally, two biasing springs 458 retain bag opening assembly 470 in a retracted position away from bottom crimping assembly 384.

Secured to the upper portion of main bucket portion 382 is a tapered funnel 490 with an upper opening 492 that extends to a lower opening 494 just above the upper sealing plate 418. A liquid injection nozzle 496 is mounted on main bucket assembly 382, just beside funnel 490. Nozzle 496 is pneumatically controlled, by PLC2 307 through electronic valves 412, and has an inlet interconnected to fluid supply system 351 (FIG. 13). Nozzle 496 preferably supplies, on demand, fluid, such as oil, onto a charge of solid bag fill, such as corn, which is deposited through the funnel 490. The fluid is provided by an associated one of the fluid pumps. Each of these fluid pumps is also controlled by rotating PLC2 307. As one fluid pump causes fluid to be released, the remaining fluid pumps are pre-loading and pressurising hoses leading to associated nozzle 496, so that once a nozzle 496 is released, sufficient fluid is quickly released.

As noted, mounted about rotating shaft 342 are upper and lower cam guides 360 and 356, illustrated in FIGS. 13, 19, 21 and 22. Upper and lower cam guides 360 and 356 each comprise two cam slots. Buckets 380 are mounted vertically upright in bucket guides 354 and 362 just above and below cam guides 356 and 360. They are further supported by upwardly, extending castings 365. Upper and lower cam followers 430, 432, 434 and 436 interconnected with upper and lower sealing and crimping assemblies 384, 386, 388 and 390 of each bucket 380 to engage tracks within upper and lower cam guides 356 and 360, respectively. Projections of upper and lower cam guides 356 and 360, about central axis 327 of turret 300 are illustrated in FIGS. 21 and 22. As shaft 342 rotates about axis 327, upper and lower cam followers, 430 and 436 directed by cam guides 356 and 360, cause crimping and sealing assemblies 384, 386, 388 and 390 of buckets 380 to open and close in sequence, as illustrated in FIGS. 24 to 35.

Outer pressure rails 290 to 296, illustrated in FIG. 20, further engage the outward face of each bucket 380 and thereby fold bags and apply pressure to rollers, such as roller 450. Ultimately, a bag stripper causes maintained bags to be ejected from each bucket 380.

In operation, an operator provides operating parameters to system 10, by way of a terminal proximate PLC1 15. Operating parameters may include, operating speed; bag type; product type; and the like. PLC1 15 adjusts the servo motor of filler 500 in accordance with the provided product type. Similarly, control parameters used by PLC2 307 (FIG. 19) are provided to PLC2 307 by the data connection through slip ring 346. PLC2 307, in response, acknowledges receipt of the data and sets the operating parameters for each bucket 380. That is, PLC2 307 adjusts the set point of each temperature controller appropriately. Similarly, dispensing time for each nozzle 496, is retained at PLC2 307.

Once operating parameters are set, roll stock 100 is pulled from feeder station 2, primarily by primary nip roller 108, as illustrated in FIG.1. Roll stock 100 passes over table 54, which properly aligns the orientation of the roll stock, so that it advances purely in the direction of flow of the roll stock. Dancer assembly 60, in combination with secondary nip roller 48 ensure that roll stock 100 is provided at a constant rate and that any fluctuations in the supply rate from feeder 12 are buffered.

At bag forming station 14, as illustrated in FIGS. 5 and 6, the fed roll stock 100 is guided along beam 72, where it is folded to form a tube. A glue lap seal is applied by glue gun 78. The lap seal is partially dried by blower 88. Thereafter, the tube is gussetted by gusset rollers 102a, 102b, 104a and 104b, and as a result of the narrowing of beam 72. Flattened, gussetted roll stock is pulled by primary nip roller 108 into cutter 12 (FIGS. 7 and 8). An optical sensor 100 in combination with PLC1 15 ensures cutter 112 cuts roll stock 100 at appropriate markings 146, so as to form bags of uniform length and are in phase with the rotation of the downstream rotating turrets.

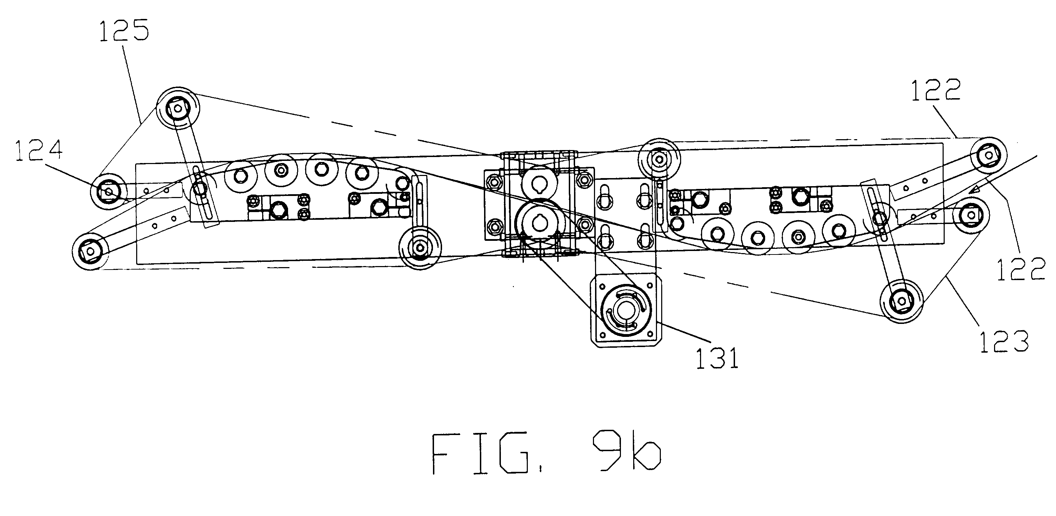

The formed bags are passed upward on inclined conveyor 120, where their length is verified by two optical sensors 126, 128 in communication with PLC1 15. Cut bags are passed to the suction surface of an overhead suction conveyor 130. Proper sized bags (as determined by PLC1 15) are blown off conveyor 130 at position P, near its end, onto inclined turret 160 (FIG. 9). Improperly sized bags are allowed to fall off the very end of conveyor 130.

PLC1 15 continuously keeps track of any bags not passed from conveyor 130 to turret 160. Rotating inclined turret 160 picks up blown-off bags from conveyor 130 by way of suction pick-up heads 166. PLC1 15 controls suction at suction cups 168, and only applies such suction in the presence of a proper length bag at location P. Picked up bags are guided by track 182 to position D, and released.

At position D, bags will have an orientation in a generally vertical plane, and are passed to a pick-up plate 208 of a horizontal rotating turret 200 (FIGS. 10 to 14). Suction cups 210 at a corresponding pick-up plate are also controlled by PLC1 15. PLC1 15 activates suction for a pick-up plate at point D. The picked up bag is transported from point D to point X, supported by guide rail 240 (FIG. 11), in a clockwise direction. At point X, suction at the pick-up plate is released by PLC1 15, and the bag is handed off to bag filing, folding and sealing station 16. As pick-up plate 208 passes from location D to location X, it pivots about an axis extending through its centre, thereby rotating a picked-up bag by ninety degrees between locations D and X. At location X a pick-up bag will be substantially upright.

As well, at location X, the picked-up bag is released and handed off to a bucket 380 mounted on main turret 300, as best illustrated in FIG. 13. Once handed off to turret 300, the bag is filled with a product such as corn and oil, snack foods, candy or the like, sealed and folded; all on a single bucket 380.

PLC1 15 tracks buckets to which no bags are supplied and ensures product is not delivered to such buckets.

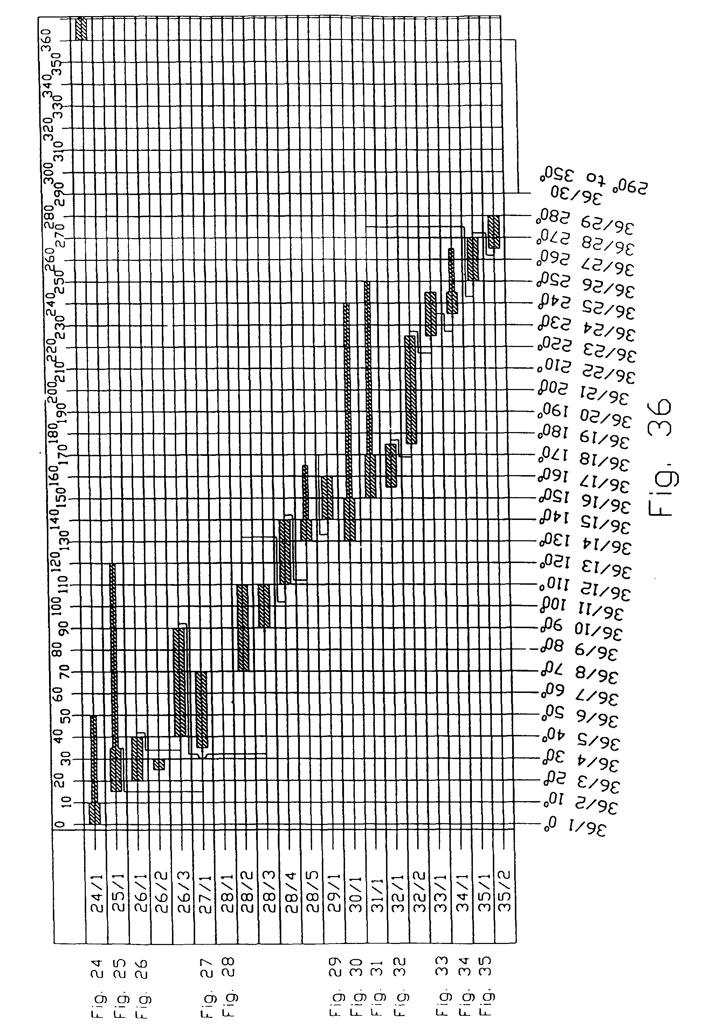

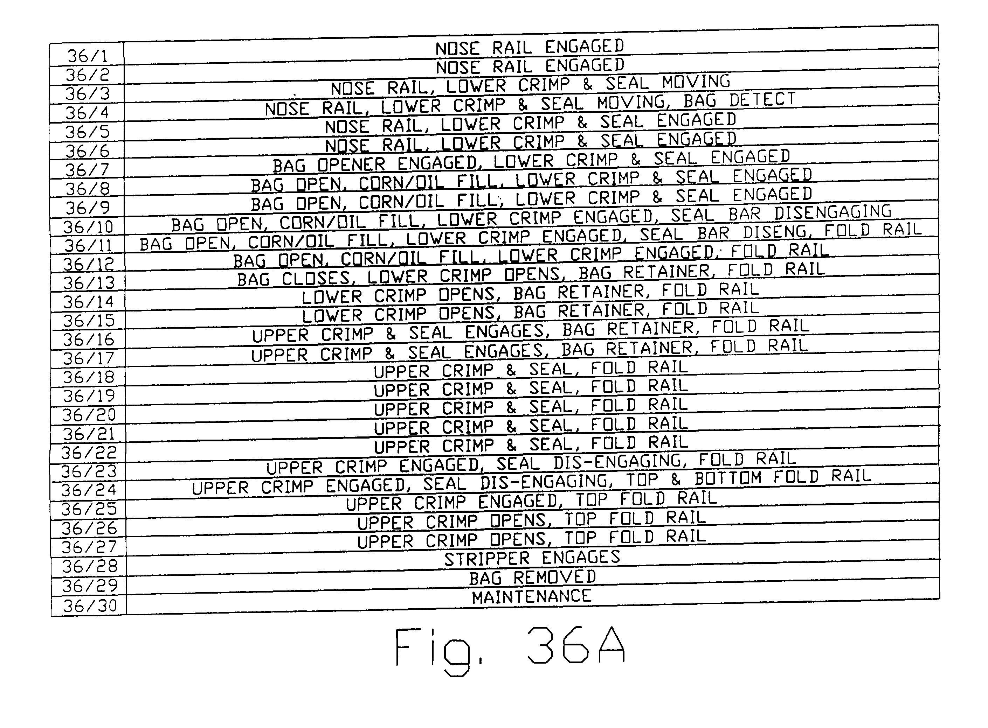

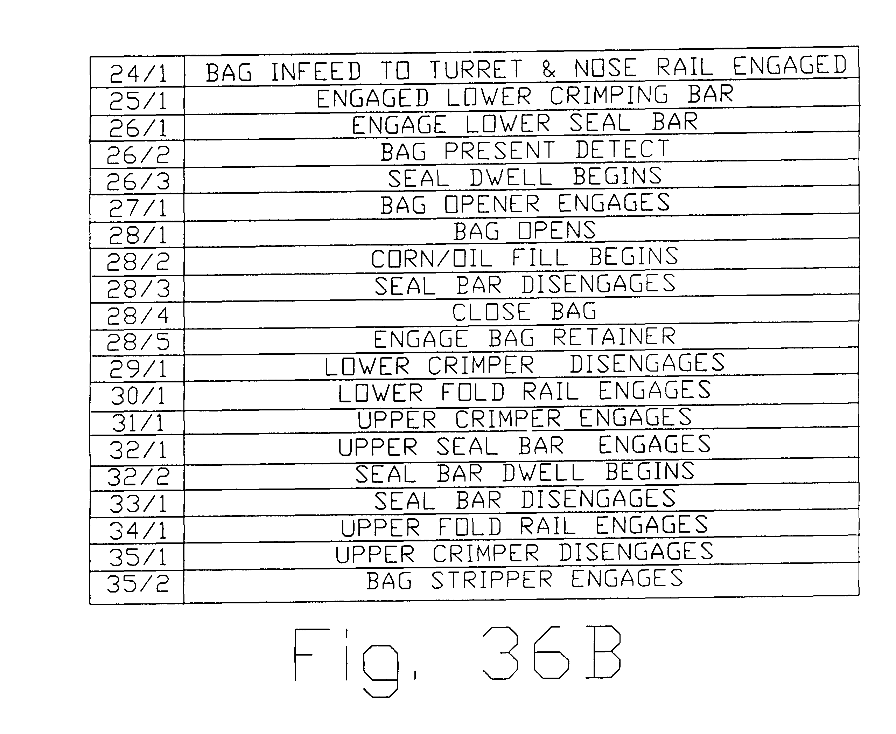

A graph detailing the operations performed at a bucket 380 measured relative to central axis 327 of turret 300 is illustrated in FIGS. 36, 36A and 36B. All measurements are made relative to the hand-off location, about the periphery of turret 300.

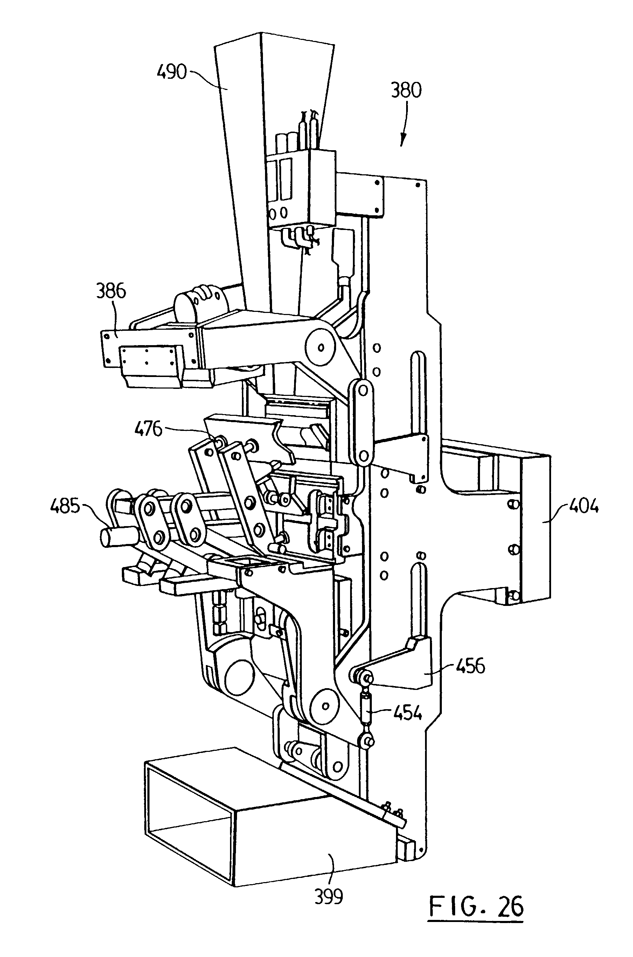

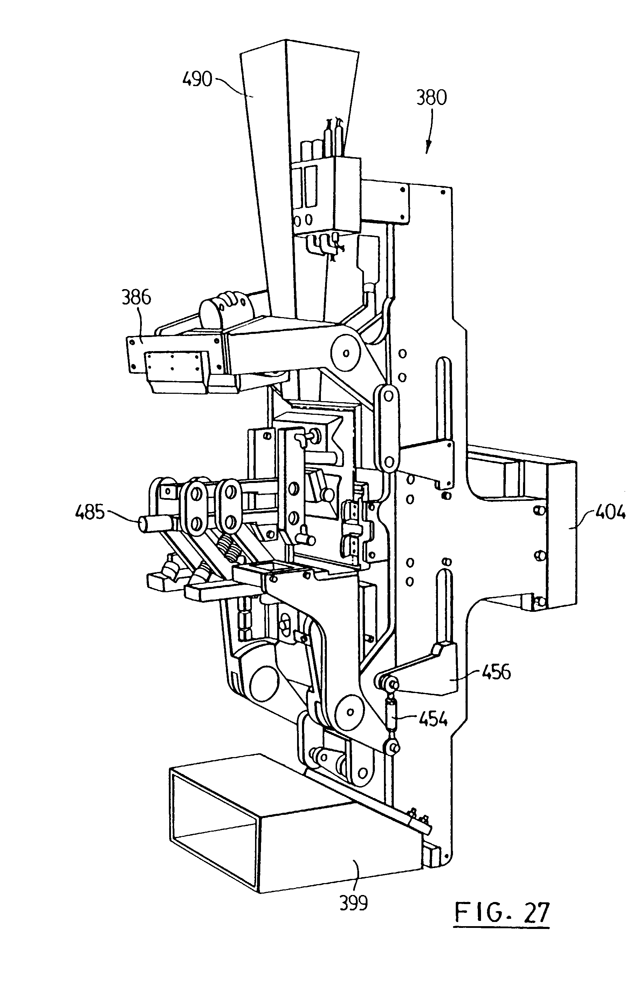

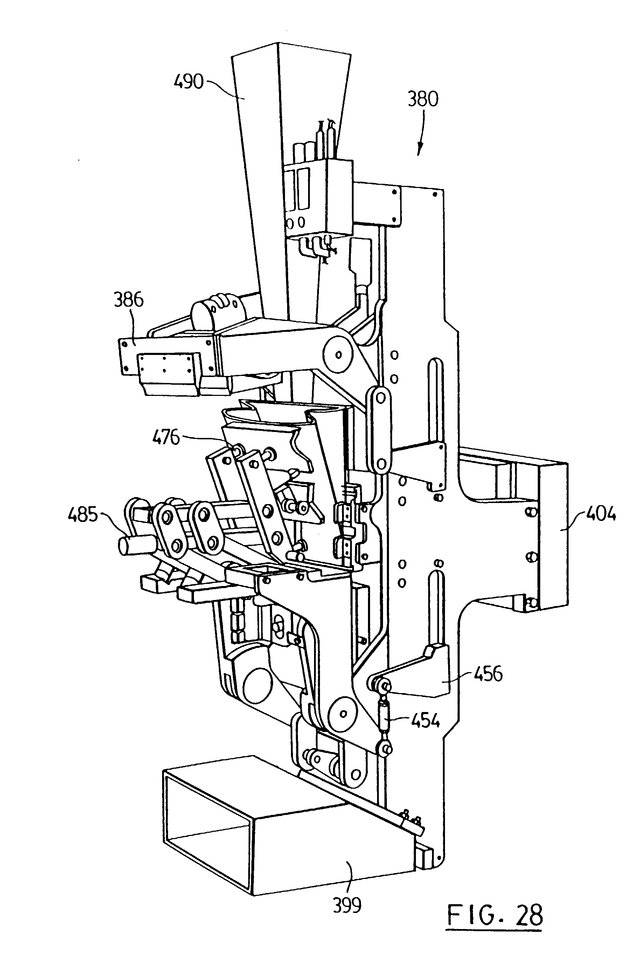

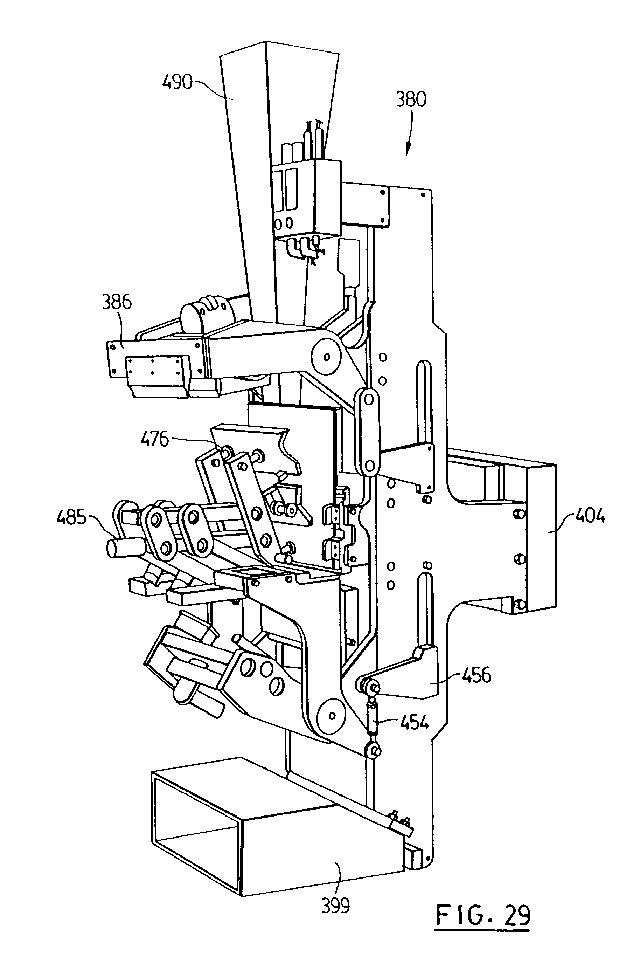

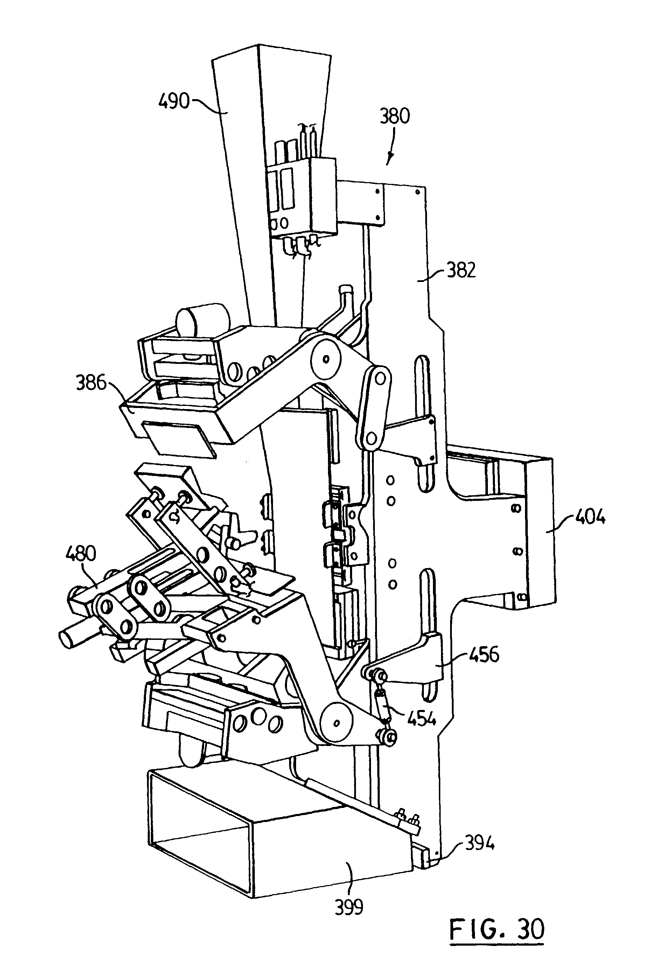

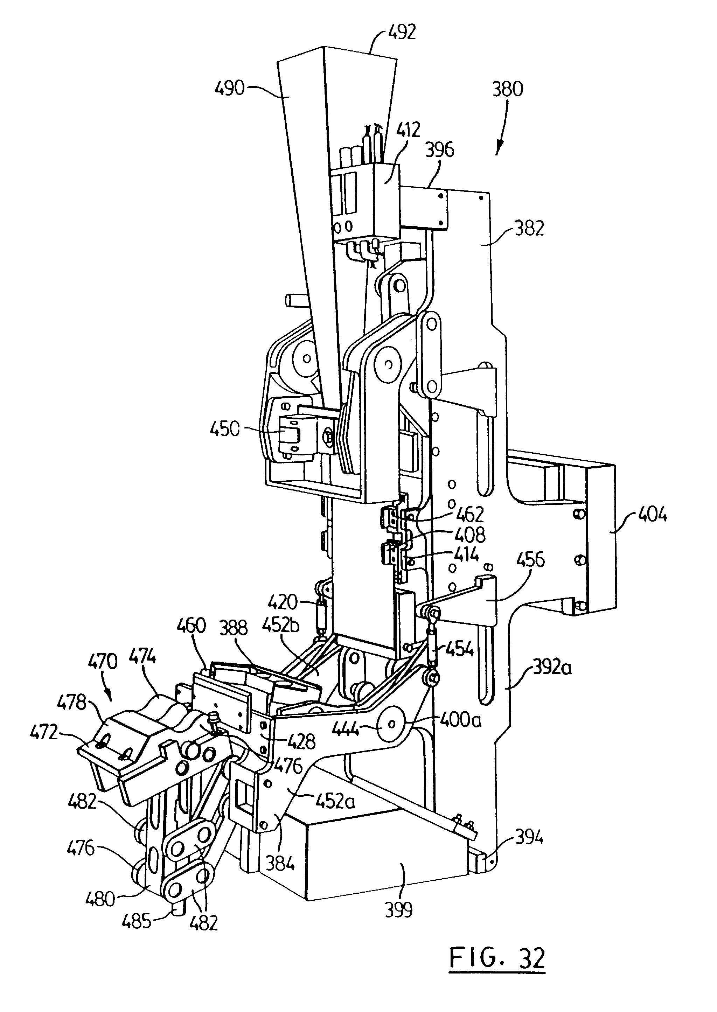

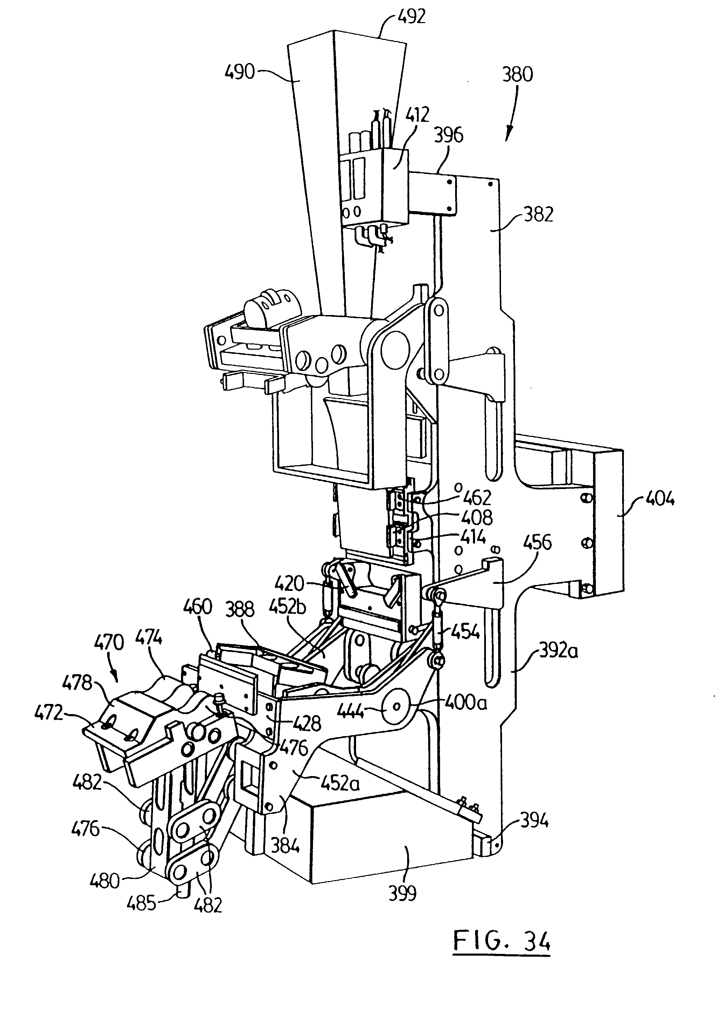

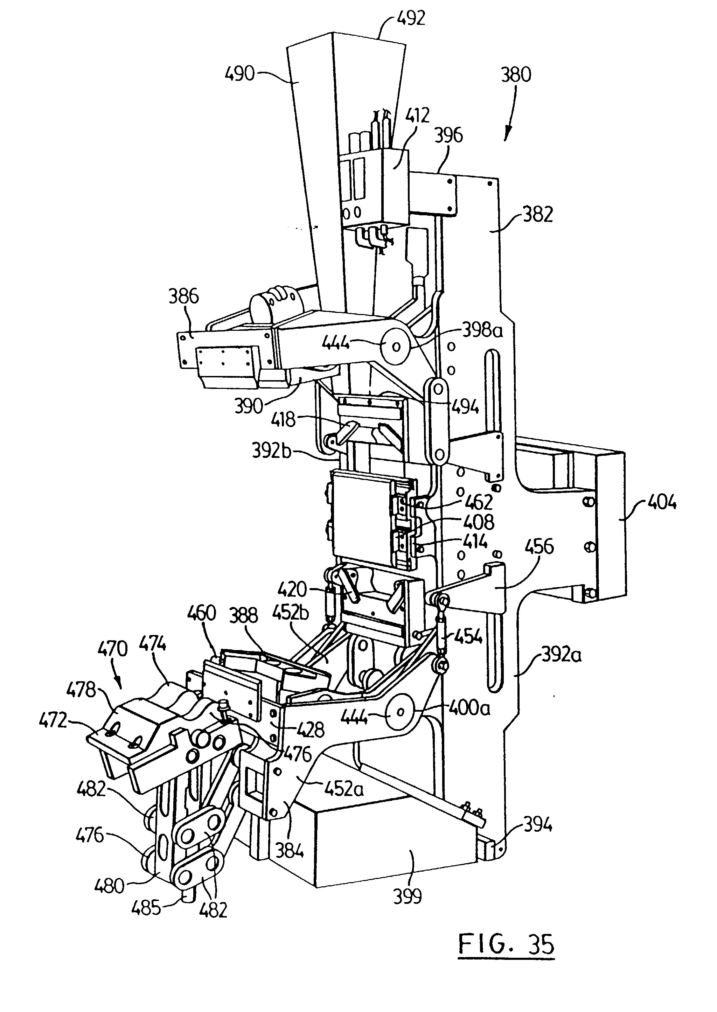

As illustrated in FIG. 36, and with reference to FIGS. 36A and 36B, which respectively provide keys to the legends along the y-axis and x-axis of the chart in FIG. 36, a bag is provided to a bucket 380 at 0°, as illustrated in FIG. 24. At the same time nose rail 290 (FIG. 20) engages the bag. At about 15°, lower crimping assembly is rotated to engage the bag, as illustrated in FIG. 25. At about 20°, and as illustrated in FIG. 26, lower sealing assembly 388 is pivoted to engage and apply heat to seal the lower portion of the retained bag, by heating region 148 (FIG.2) of the bag. Presence of bag within bucket is detected by an optical sensor (not shown) at 15°, so that empty buckets are not filled with products. The bag opening assembly 370 is engaged at about 35 and pressed into abutment with the bag by rail 291, until it is in contact with the bag at about 55°, as illustrated in FIG. 27. At this time, PLC1 15 activates suction at suction cups 440 of bag opening assembly 370 and the bag is fully opened at about 70°, as illustrated in FIG. 28. PLC1 15 tabulates the position of each bucket about shaft 32 by way of resolver 330. PLC1 15 thereafter releases solid by pneumatic slide gate under volumetric cup filler from turret 500 (FIG. 23a) and PLC2 releases a fluid from nozzle 496 into the opened bag between 70° and 110°. The lower seal assembly 388, and bag opening assembly 370 begin to disengage at about 135°, as illustrated in FIG. 29 until they are fully retracted from the bag at 160°, as illustrated in FIG. 30. The bag is retained in a near closed position by retaining rail 289 between about 125° and 165°, at which time upper crimping assembly 386 will have engaged. At the same time, a lower fold rail 294 engages the bag. As well, an upper crimping assembly 386 begins to pivot toward the bag, as also illustrated in FIG. 30, narrowly avoiding contact with lower crimping assembly 384. At about 170°, the upper crimping assembly fully engages the bag, as illustrated in FIG. 31. At about 155°, the upper seal assembly 390 begins to engage the top of the bag, as illustrated in FIG. 32. The upper seal assembly is not disengaged from the bag until about 225°, as illustrated in FIG. 34. At about 230°, the upper fold rail 296 engages the bag, while the upper crimping assembly 386 is retracted, as illustrated in FIGS. 34 and 35. The bag is finally ejected from bucket 380 at 280°, by a bag stripper that engages the bag at about 265°. At this point the glue applied to the centre seam of the bag should be dry. The ejected bag may be conveyed from system 10, by a belt conveyor (not shown), and may then be further packaged.

As should be appreciated, pivoting motion of upper and lower heat sealing and crimping assemblies 384, 386, 388 and 390 is caused by cam followers 430, 432, 434 and 436 following cam tracks 356 and 360.

As should now also be appreciated, system 10 function to produce folded, filled and sealed bags and may operate at a rate of up to 300 bags per minute.

## Claims

1. A controlled assembly apparatus, particularly for use in a packaging system, comprising:
a stationary platform;
a rotating platform, rotating relative to said stationary platform and comprising a plurality of assembly stations, each assembly station comprising an electrically controllable or monitorable peripheral;
a first programmable logic controller, on said stationary platform;
a second programmable logic controller, on said rotating platform, electrically interconnected to said peripherals of said assembly stations to control or monitor said peripherals and communicatively coupled to said first programmable logic controller to exchange control or monitoring signals with said first programmable logic controller.

2. The apparatus of claim 1, further comprising:
a slip ring, electrically interconnecting said stationary platform to said rotating platform to communicatively couple said second programmable logic controller to said first programmable logic controller.

3. The apparatus of claim 2, further comprising:
a serial data link interconnecting said first programmable logic controller to said second programmable logic controller by said slip ring, for exchange of control or monitoring signals between said first programmable logic controller and said second programmable logic controller.

4. The apparatus of any preceding claim, wherein said each of said peripherals comprises an independently controllable heating unit for applying controlled heat to a work piece at an associated station.

5. The apparatus of claim 4, wherein each of said heating units is controllable to assume a set point temperature, and wherein said set point temperature is adjustable by said second programmable logic controller.

6. The apparatus of claim 5, wherein said first programmable logic controller provides suitable set point temperatures for said heating units to said second programmable logic controller by way of a serial data link interconnecting the first and second programmable logic controllers.

7. The apparatus of claim 6, wherein data provided from said first programmable logic controller provides data to independently identify and control each of said temperature controllers on said rotating platform.

8. The apparatus of any preceding claim, wherein each of said peripherals comprises an electrically controllable pneumatic valve, for operating a pneumatic peripheral at an associated assembly station.

9. An assembly apparatus, particularly for use in a packaging system, comprising:
a support comprising a laterally extending guide;
a work station movably mounted on said support, for movement along said guide;
said work station comprising:
a working surface and an operations arm, said operations arm being movable from a first arm position away from said working surface to a second arm position, whereat said operations arm exerts force on a work object held at said working surface;
a cam follower movable linearly between a first follower position and a second follower position, and operably interconnected with said operations arm to move said arm from said first arm position to said second arm position, as said cam follower is moved from said first follower position to said second follower position;
a cam guide, extending laterally along said support, and engaging said cam follower to transversely guide said cam follower from said first follower position to said second follower position as said work station is moved laterally along said support; and
a pressure rail, extending laterally along said support and proximate to said operations arm to exert pressure on said operations arm toward said working surface, after said arm is in said second arm position.

10. The apparatus of claim 9, wherein said cam guide extends transversely to said support, and said pressure rail extends laterally along said support opposite said cam guide.

11. The apparatus of claim 9 or claim 10, wherein said support comprises a circular base, and said guide, said cam guide, and said pressure rail extend along arcuate paths about said base.

12. A continuous conveyor system, particularly for use in packaging apparatus, for delivering containers from a first station to a second station along a predetermined path, each said container having a longitudinal axis, said system comprising a rotation apparatus which rotates each said container about its longitudinal axis and rotates each said container to rotate said longitudinal axis.

13. A system as claimed in claim 12, wherein said rotation apparatus comprises a first rotation device to rotate each of said containers about its longitudinal axis, and a second rotation device to rotate each of said containers to rotate said longitudinal axis.

14. A system as claimed in claim 13, wherein said first rotation device comprises a first continuous conveyor turret mounted for rotation about a first turret axis, a drive mechanism to rotate said first conveyor turret about said first turret axis, said first conveyor turret having mounted on said first conveyor turret around said first turret axis a plurality of retainers, each of said retainers having a pick up face oriented at an inclined angle of less than ninety degrees relative to said first turret axis when at said container receiving station, said retainers of said first turret each being adapted to pick up a container at a first turret container receiving station, to hold said container and then to release said container to said second rotation device at a first turret container discharge station, each of said retainers rotating on said first turret about said first turret axis between said container receiving station and said container discharge station, such that when each said container is rotated from said first conveyor turret receiving station to said first turret discharge station, each of said containers is rotated about its longitudinal axis.

15. A continuous conveyor system, particularly for use in packaging apparatus, for performing at least one operation on each of a plurality of work pieces, said conveyor system having a plurality holders, said conveyor system operable to continuously move said holders from a first station to a second station, each of said holders comprising:
- a base having adapted to receive, hold and release a work piece;
- a first operation assembly mounted for pivoting movement in relation to said base and adapted to perform a first operation on a work piece; and
- a second operation assembly mounted for pivoting movement in relation to said base and adapted to perform a second operation on said work piece held by said base;
said system being operable to move said first operation assembly proximate said work piece to perform said first operation on said work piece, and operable to thereafter move said second operation assembly proximate said work piece, to perform said second operation on said work piece.

16. A continuous conveyor system, particularly for use in packaging apparatus, for performing one or more operations on a plurality a containers being carried by a plurality of holders on a predetermined path from a first station to a second station by said conveyor system, each of said holders comprising:
- a base being adapted to receive, hold and release a container;
- a first operation assembly mounted for rotation in relation to said base and adapted to perform a first operation on a container held by said holder; and
- a second operation assembly mounted for rotation in relation to said base and adapted to perform a second operation on said container held by said holder;
said system being operable to rotate said first operation assembly proximate said container to perform said first operation on said container, and operable to thereafter rotate said second operation assembly proximate said container, to perform said second operation on said container.

17. A system as claimed in claim 16 further comprising:
- a third operation assembly mounted for rotation in relation to said base and adapted to perform a third operation on a container held by said holder; and
- a fourth operation assembly mounted for rotation in relation to said base and adapted to perform a fourth operation on said container held by said holder;
said system being operable to rotate said third operation assembly proximate said container to perform said third operation on said container, and being also operable to rotate said fourth operation assembly proximate said container, to perform said fourth operation on said container.

18. A continuous transfer conveyor system, particularly for use in packaging apparatus, to transfer at least one container from a first loading station along a predetermined path to a second drop off station, said conveyor system comprising:
a turret mounted for rotation about a turret axis;
a drive mechanism to rotate said turret about said turret axis;
a retainer mounted to said turret to pick up, hold and release a container that is in a position proximate said retainer, while said turret is rotating; and
an alignment element associated with said retainer, said alignment element being mounted for movement between a container engagement position to align said container in relation to said retainer and a container disengagement position;
said system being operable to disengage said alignment element when each retainer is at said loading station and then engage said alignment element along a part of said predetermined path after said loading station and between said loading station and said drop off station, and then disengage said alignment element before said retainer reaches said drop off station.

19. An assembly apparatus, particularly for use in a packaging system, comprising:
a support comprising a laterally extending guide;
a work station; said work station comprising a working surface and an operations arm, said operations arm being movable from a first arm position away from said working surface to a second arm position proximate said working surface;
a cam follower and a cam guide; one of said cam follower and said cam guide extending from said workstation and operatively interconnected with said operations arm to move said operations arm from said first arm position to said second arm position; the other one of said cam follower and said cam guide, extending from said support; said work station and said support being linearly movable relative to each other guided by said guide, said cam follower and said cam guide being interconnected to move said operations arm from said first arm position to said second arm position, as said work station and said support are moved relative to each other; and
a pressure rail, extending laterally proximate said guide and said operations arm to exert pressure on said operations arm toward said working surface, after said operations arm is in said second arm position.
